# EUROPÄISCHE PATENTSCHRIFT

(11) **EP 4 168 291 B1**
(45) Veröffentlichungstag und Bekanntmachung des Hinweises auf die Patenterteilung: **19.11.2025**
(21) Anmeldenummer: 21731079.6
(22) Anmeldetag: 02.06.2021
(51) Int. Cl.: B62D 21/09, B62D 21/10, B32B 37/00, B62D 29/04, B32B 27/00, B62D 24/00

(54) **SANDWICHBAUTEIL, FAHRZEUG, VERFAHREN ZUR HERSTELLUNG EINES SANDWICHBAUTEILS UND HERSTELLUNGSVORRICHTUNG ZUR HERSTELLUNG EINES SANDWICHBAUTEILS**
SANDWICH COMPONENT, VEHICLE, METHOD FOR PRODUCING A SANDWICH COMPONENT AND PRODUCTION APPARATUS FOR PRODUCING A SANDWICH COMPONENT
COMPOSANT SANDWICH, VÉHICULE, PROCÉDÉ DE FABRICATION D'UN COMPOSANT SANDWICH ET APPAREIL DE PRODUCTION POUR LA FABRICATION D'UN COMPOSANT SANDWICH

(30) Priorität: 22.06.2020 DE 102020207716
(43) Veröffentlichungstag der Anmeldung: 26.04.2023
(73) Patentinhaber: Deutsches Zentrum für Luft- und Raumfahrt e.V., 53227 Bonn (DE)
(72) Erfinder: KRIESCHER, Michael, 73102 Birenbach (DE); SCHEIBE, Sebastian, 70771 Leinfelden-Echterdingen (DE); OSEBEK, Manuel, 72800 Eningen u.A. (DE)
(74) Vertreter: DTS Patent- und Rechtsanwälte PartmbB
(86) Internationale Anmeldenummer: PCT/EP2021/064748
(87) Internationale Veröffentlichungsnummer: WO 2021/259603

(56) Entgegenhaltungen:
- WO-A1-2015/147973
- DE-A1- 102014 206 639
- KR-A- 20110 130 636

## Beschreibung

Die Erfindung betrifft ein Sandwichbauteil für ein Fahrzeug, insbesondere Landfahrzeug und/oder Kraftfahrzeug.

Weiterhin betrifft die Erfindung ein Fahrzeug, insbesondere Landfahrzeug und/oder Kraftfahrzeug, umfassend ein Sandwichbauteil.

Weiterhin betrifft die Erfindung ein Verfahren zur Herstellung eines Sandwichbauteils für ein Fahrzeug, insbesondere Landfahrzeug und/oder Kraftfahrzeug. Weiterhin betrifft die Erfindung eine Herstellungsvorrichtung zur Herstellung eines Sandwichbauteils für ein Fahrzeug, insbesondere Landfahrzeug und/oder Kraftfahrzeug.

Aus der DE 10 2014 206 639 A1, KR 2011 013063 und der WO 2018/019524 A1 sind jeweils ein Sandwichbauteil mit einem Schaumkern und ein Verfahren zu dessen Herstellung bekannt.

Aus der WO 2015/147973 A1 ist ein Verfahren zum Einbringen von Verbindungselementen in ein Sandwichbauteil bekannt.

Aus der DE 10 2018 202 016 A1 sind Fügeelemente zum Einbringen in ein Sandwichbauteil und/oder zum Verbinden von plattenförmigen Bauteilen bekannt.

Aus der DE 10 2009 018 131 A1 sind ein Verfahren und eine Vorrichtung zur Herstellung eines dreidimensionalen Strukturelements bekannt.

Aus der DE 20 2011 002 853 U1 ist eine selbsttragende Kraftfahrzeugkarosserie bekannt.

Aus der DE 20 2004 019 000 U1 ist ein selbsttragender Fußbodenaufbau aus einem Sandwichmaterial für Container, Wechselbehälter und Lastwagenaufbauten bekannt.

Der Erfindung liegt die Aufgabe zugrunde, ein eingangs genanntes Sandwichbauteil bereitzustellen, welches bei vereinfachter Herstellbarkeit vielseitig einsetzbar ist.

Diese Aufgabe wird bei dem eingangs genannten Sandwichbauteil erfindungsgemäß dadurch gelöst, dass das Sandwichbauteil eine erste Decklage umfasst, eine zu der ersten Decklage beabstandete zweite Decklage, ein zwischen der ersten Decklage und der zweiten Decklage angeordnetes Kernmaterial und eine Mehrzahl von Fügeelementen zur Herstellung einer mechanischen Verbindung zwischen der ersten Decklage und der zweiten Decklage, wobei die Fügeelemente zumindest abschnittsweise zwischen der ersten Decklage und der zweiten Decklage angeordnet sind und/oder die Fügeelemente zumindest abschnittsweise durch das Kernmaterial durchgeführt sind, und wobei mindestens ein Fügeelement mindestens ein Befestigungselement aufweist, mittels welchem eine mechanische Verbindung zwischen einem Bauelement und dem Sandwichbauteil herstellbar ist oder hergestellt ist, und wobei die Fügeelemente jeweils einen ersten Teilkörper und einen zweiten Teilkörper aufweisen, wobei der zweite Teilkörper mit dem ersten Teilkörper verbindbar ist oder verbunden ist, wobei der erste Teilkörper ein Innengewinde aufweist und wobei der zweite Teilkörper ein Außengewinde aufweist.

Insbesondere kann es vorgesehen sein, dass das erfindungsgemäße Sandwichbauteil als tragendes Strukturbauteil für ein Fahrzeug, insbesondere Landfahrzeug und/oder Kraftfahrzeug, eingesetzt wird. Insbesondere lässt sich dadurch das Fahrzeug vereinfacht herstellen und/oder mit einer verringerten Anzahl an Produktionsschritten herstellen. Beispielsweise lässt sich das Fahrzeug mittels des erfindungsgemäßen Sandwichbauteils modular aufbauen und/oder mit einer verringerten Anzahl an Komponenten ausführen.

Insbesondere kann es vorgesehen sein, dass das Sandwichbauteil ein tragendes Strukturbauteil, insbesondere eine Trageplatte und/oder ein Trageelement, ist.

Beispielsweise dient das Sandwichbauteil zur Aufnahme einer Fahrerkabine des Fahrzeugs.

Beispielsweise dient das Sandwichbauteil zur Aufnahme und/oder Ausbildung eines Ladebereichs und/oder einer Ladefläche des Fahrzeugs.

Beispielsweise ist das mit dem Sandwichbauteil verbindbare Bauelement eine Fahrzeugkomponente und/oder eine Fahrzeugkabine und/oder ein Fahrwerk und/oder eine Laderaumkabine eines Fahrzeugs.

Insbesondere kann es vorgesehen sein, dass die erste Decklage und/oder die zweite Decklage als Blech ausgeführt sind, beispielsweise als Aluminiumblech oder Stahlblech.

Günstig kann es sein, wenn das Kernmaterial ein Schaummaterial ist oder umfasst. Beispielsweise ist oder umfasst das Schaummaterial Kunststoffschaum und/oder Montageschaum und/oder ein PU-Schaummaterial und/oder ein PET-Schaummaterial und/oder ein Epoxy-Schaummaterial.

Beispielsweise ist zwischen der ersten Decklage und der zweiten Decklage ein Zwischenraum ausgebildet, in welchem das Kernmaterial angeordnet ist.

Beispielsweise erstrecken sich die Fügeelemente zumindest abschnittsweise durch den Zwischenraum.

Insbesondere kann es vorgesehen sein, dass die Fügeelemente ausschließlich in dem Zwischenraum angeordnet sind.

Günstig kann es sein, wenn die Fügeelemente nicht über den Zwischenraum und/oder die erste Decklage und/oder die zweite Decklage hinausragen.

Beispielsweise beträgt eine Höhe des Sandwichelements mindestens 20 mm und/oder höchstens 100 mm.

Beispielsweise sind mittels des Sandwichelements Kräfte von mindestens 5000 N aufnehmbar.

Insbesondere kann es vorgesehen sein, dass eine an der ersten Decklage gebildete erste Außenseite des Sandwichbauteils und/oder eine an der zweiten Decklage gebildete zweite Außenseite des Sandwichbauteils glatt und/oder eben ausgebildet sind.

Beispielsweise ist die erste Außenseite und/oder die zweite Außenseite jeweils eine einem zwischen der ersten Decklage und der zweiten Decklage gebildeten Zwischenraum abgewandte Seite des Sandwichbauteils.

Insbesondere kann es vorgesehen sein, dass das Kernmaterial die erste Decklage und/oder die zweite Decklage mechanisch und/oder flächig kontaktiert.

Insbesondere kann es vorgesehen sein, dass das Kernmaterial stoffschlüssig, z.B. mittels Klebstoff, mit der ersten Decklage und/oder der zweiten Decklage verbunden ist.

Insbesondere kann es vorgesehen sein, dass die Fügeelemente formschlüssig und/oder kraftschlüssig und/oder stoffschlüssig mit der ersten Decklage und/oder der zweiten Decklage verbunden sind.

Insbesondere kann es vorgesehen sein, dass die Fügeelemente jeweils einen ersten Flanschbereich zur Verbindung mit der ersten Decklage aufweisen und/oder einen zweiten Flanschbereich zur Verbindung mit der zweiten Decklage aufweisen.

Beispielsweise liegt der erste Flanschbereich an einer ersten Innenseite der ersten Decklage an.

Beispielsweise liegt der zweite Flanschbereich an einer zweiten Innenseite der zweiten Decklage an.

Beispielsweise sind die erste Innenseite und die zweite Innenseite einander gegenüberliegend angeordnet.

Die Fügeelemente weisen jeweils einen ersten Teilkörper und einen zweiten Teilkörper auf, wobei der zweite Teilkörper mit dem ersten Teilkörper verbindbar ist oder verbunden ist.

Der erste Teilkörper weist ein Innengewinde auf und der zweite Teilkörper weist ein Außengewinde auf, wobei das Außengewinde des zweiten Teilkörpers in das Innengewinde des ersten Teilkörpers einschraubbar oder eingeschraubt ist.

Beispielsweise ist an dem zweiten Teilkörper mindestens ein Befestigungselement des Fügeelements ausgebildet.

Beispielsweise weisen der zweite Teilkörper und/oder das Befestigungselement ein Innengewinde auf.

Beispielsweise umfasst der erste Teilkörper einen ersten Flanschbereich zur mechanischen Verbindung mit der ersten Decklage.

Beispielsweise umfasst der zweite Teilkörper einen zweiten Flanschbereich zur mechanischen Verbindung mit der zweiten Decklage.

Insbesondere kann es vorgesehen sein, dass das mindestens eine Fügeelement, welches mindestens ein Befestigungselement umfasst, einen Innenbereich aufweist, welcher sich in einer zu der ersten Decklage und/oder zweiten Decklage quer und insbesondere senkrecht orientierten Richtung erstreckt.

Insbesondere kann es vorgesehen sein, dass in dem Innenbereich das mindestens eine Befestigungselement des Fügeelements angeordnet und/oder ausgebildet ist.

Beispielsweise ist das mindestens eine Befestigungselement an dem Fügeelement als Innengewinde ausgebildet oder umfasst ein an dem Fügeelement angeordnetes Innengewinde.

Beispielsweise erstreckt sich das Innengewinde in einer zu der ersten Decklage und/oder zweiten Decklage quer und insbesondere senkrecht orientierten Richtung.

Beispielsweise weist das Fügeelement eine erste Öffnung zu dem Befestigungselement auf und/oder eine zu der ersten Öffnung beabstandete zweite Öffnung zu dem Befestigungselement auf.

Insbesondere kann es vorgesehen sein, dass mittels des mindestens einen Befestigungselements eine formschlüssige und/oder kraftschlüssige Verbindung zwischen einem mit dem Sandwichbauteil verbindbaren oder verbundenen Bauelement und dem mindestens einen Fügeelement herstellbar ist.

Beispielsweise ist das Bauelement mittels einer formschlüssigen und/oder kraftschlüssigen Verbindung an dem Sandwichbauteil fixierbar oder fixiert.

Günstig kann es sein, wenn das Bauelement mittels einer Schraubverbindung mit dem mindestens einen Befestigungselement verbindbar ist.

Insbesondere kann es vorgesehen sein, dass das mindestens eine Befestigungselement an einer ersten Außenseite der ersten Decklage und/oder an einer zweiten Außenseite der zweiten Decklage zugänglich ist.

Beispielsweise lässt sich mittels des mindestens einen Befestigungselements ein an der ersten Außenseite der ersten Decklage angeordnetes Bauelement und/oder ein an der zweiten Außenseite der zweiten Decklage angeordnetes Bauelement mit dem Sandwichelement verbinden.

Beispielsweise ist an der ersten Decklage mindestens eine erste Öffnung ausgebildet, welche mindestens einem Befestigungselement eines Fügeelements zugeordnet ist.

Beispielsweise ist an der zweiten Decklage mindestens eine zweite Öffnung ausgebildet, welche mindestens einem Befestigungselement eines Fügeelements zugeordnet ist.

Es kann vorgesehen sein, dass eine an der ersten Decklage ausgebildete erste Öffnung und eine an der zweiten Decklage ausgebildete zweite Öffnung demselben Befestigungselement zugeordnet sind.

Insbesondere kann es vorgesehen sein, dass eine jeweilige erste Öffnung und/oder eine jeweilige zweite Öffnung derart angeordnet sind, dass mittels der jeweiligen ersten Öffnung und/oder der jeweiligen zweiten Öffnung ein der jeweiligen ersten Öffnung und/oder der jeweiligen zweiten Öffnung zugeordnetes Befestigungselement zugänglich ist.

Beispielsweise sind die jeweilige erste Öffnung und/oder die jeweilige zweite Öffnung fluchtend bezüglich eines der ersten Öffnung und/oder der zweiten Öffnung zugeordneten Befestigungselements angeordnet.

Beispielsweise sind die jeweilige erste Öffnung und/oder die jeweilige zweite Öffnung fluchtend bezüglich eines Innenbereichs und/oder Innengewindes eines der jeweiligen ersten Öffnung und/oder der jeweiligen zweiten Öffnung zugeordneten Befestigungselements angeordnet.

Bei einer Ausführungsform umfasst das Sandwichbauteil eine Mehrzahl von Ausnehmungen, welche in mindestens einem Eckbereich und/oder Kantenbereich des Sandwichbauteils angeordnet und/oder ausgebildet sind.

Insbesondere kann es vorgesehen sein, dass die Ausnehmungen bezüglich einer Höhenrichtung des Sandwichbauteils durchgängig durch das Sandwichbauteil verlaufen.

Beispielsweise sind die Ausnehmungen zur Energieabsorption im Fall äußerer Krafteinwirkung auf das Sandwichbauteil, z.B. im Fall eines Unfallereignisses und/oder Zusammenstoßes, eingerichtet und ausgebildet.

Beispielsweise sind die Ausnehmungen in einem vorderen und/oder hinteren Endbereich eines Fahrzeugs angeordnet, welches das Sandwichbauteil umfasst.

Insbesondere kann es vorgesehen sein, dass die Ausnehmungen in einem ersten Endbereich des Sandwichbauteils und/oder in einem zu dem ersten Endbereich in Längenrichtung beabstandeten zweiten Endbereich des Sandwichbauteils angeordnet sind.

Insbesondere kann es vorgesehen sein, dass mehrere zueinander beabstandete Ausnehmungen entlang eines Kantenbereichs und/oder längs eines Kantenbereichs angeordnet und/oder ausgebildet sind.

Insbesondere kann es vorgesehen sein, dass sich die Ausnehmungen von der ersten Decklage zu der zweiten Decklage erstrecken.

Beispielsweise erstrecken sich die Ausnehmungen in Höhenrichtung des Sandwichbauteils vollständig durch das Sandwichbauteil.

Beispielsweise erstrecken sich die Ausnehmungen durch einen zwischen der ersten Decklage und der zweiten Decklage gebildeten Zwischenraum des Sandwichbauteils.

Vorteilhaft kann es sein, wenn mindestens ein Fügeelement als Kombinationselement ausgebildet ist, wobei das Kombinationselement ein Strukturmaterial aufweist und mindestens ein Befestigungselement, welches an dem Strukturmaterial angeordnet und/oder ausgebildet ist.

Insbesondere kann es vorgesehen sein, dass das Kombinationselement und/oder das Strukturmaterial des Kombinationselements mit dem Kernmaterial stoffschlüssig verbunden ist.

Beispielsweise ist oder umfasst das Strukturmaterial des Kombinationselements Holz.

Insbesondere kann es vorgesehen sein, dass das Kernmaterial mindestens eine Ausnehmung aufweist, in welcher das Kombinationselement angeordnet ist.

Beispielsweise entspricht eine Höhe des Kombinationselements einer Höhe des Kernmaterials und/oder einem kürzesten Abstand zwischen der ersten Decklage und der zweiten Decklage.

Insbesondere kann es vorgesehen sein, dass das mindestens eine Befestigungselement in das Strukturmaterial des Kombinationselements integriert und/oder eingebettet ist.

Insbesondere kann es vorgesehen sein, dass das Sandwichbauteil ein Aufnahmeelement zur Anordnung und/oder zur Aufnahme eines Bauteils an dem Sandwichbauteil umfasst, wobei das Aufnahmeelement zumindest abschnittsweise innerhalb eines zwischen der ersten Decklage und der zweiten Decklage gebildeten Zwischenraums angeordnet ist und/oder wobei das Aufnahmeelement lösbar mit mindestens einem Befestigungselement des Sandwichbauteils verbindbar ist oder verbunden ist.

Insbesondere kann es vorgesehen sein, dass das Aufnahmeelement als Batteriegehäuse und/oder zur Aufnahme einer Batterie eingerichtet und ausgebildet ist.

Bei einer Ausführungsform ist das Aufnahmeelement in das Sandwichbauteil integriert.

Beispielsweise ist das Aufnahmeelement vollständig in dem Zwischenraum zwischen der ersten Decklage und der zweiten Decklage angeordnet. Beispielsweise ist das Aufnahmeelement in das Kernmaterial eingebettet und/oder das Kernmaterial weist eine Ausnehmung zur Aufnahme des Aufnahmeelements auf.

Beispielsweise ist das Aufnahmeelement an dem Sandwichbauteil nicht von außen zugänglich.

Beispielsweise ist das Aufnahmeelement ist nicht zerstörungsfrei an dem Sandwichbauteil zugänglich und/oder von dem Sandwichbauteil lösbar.

Bei einer alternativen Ausführungsform ist das Aufnahmeelement lösbar mit mindestens einem Befestigungselement des Sandwichbauteils verbindbar oder verbunden.

Beispielsweise ist das Aufnahmeelement von außen an dem Sandwichbauteil zugänglich.

Beispielsweise ist das Aufnahmeelement mittels einer Schraubverbindung mit mindestens einem Befestigungselement des Sandwichbauteils lösbar verbindbar oder verbunden.

Beispielsweise steht das Aufnahmeelement zumindest abschnittsweise in Höhenrichtung über die erste Decklage und/oder die zweite Decklage über.

Beispielsweise weisen die erste Decklage und/oder die zweite Decklage und/oder das Kernmaterial eine Ausnehmung zur Aufnahme des Aufnahmeelements auf.

Beispielsweise weist das Aufnahmeelement einen Flanschbereich zur Anlage an eine erste Außenseite der ersten Decklage auf und/oder das Aufnahmeelement weist einen Flanschbereich zur Anlage an eine zweite Außenseite der zweiten Decklage auf.

Beispielsweise ist das Aufnahmeelement mittels des Flanschbereichs mit mindestens einem Befestigungselement des Sandwichbauteils lösbar verbindbar oder lösbar verbunden.

Erfindungsgemäß wird ein Fahrzeug bereitgestellt, umfassend ein erfindungsgemäßes Sandwichbauteil.

Beispielsweise ist das Fahrzeug ein Personenkraftwagen und/oder Lastkraftwagen und/oder Kleintransporter.

Beispielsweise ist das Sandwichbauteil an dem Fahrzeug als Grundplatte und/oder als tragende Struktur eingerichtet und ausgebildet.

Beispielsweise entspricht eine maximale Länge und/oder maximale Breite des Sandwichbauteils zumindest näherungsweise einer maximalen Länge und/oder maximalen Breite des Fahrzeugs.

Insbesondere kann es vorgesehen sein, dass das Fahrzeug ein Fahrwerk und/oder eine vordere Fahrzeugachse und/oder eine hintere Fahrzeugachse aufweist, wobei das Fahrwerk und/oder die vordere Fahrzeugachse und/oder die hintere Fahrzeugachse mittels mindestens eines Befestigungselements des Sandwichbauteils mit dem Sandwichbauteil mechanisch verbunden sind.

Vorteilhaft kann es sein, wenn das Fahrzeug eine Fahrerkabine aufweist, welche mittels mindestens eines Befestigungselements des Sandwichbauteils mit dem Sandwichbauteil mechanisch verbunden ist.

Günstig kann es sein, wenn das Fahrzeug eine an dem Sandwichbauteil angeordnete und/oder aus dem Sandwichbauteil gebildete Ladefläche aufweist, welche insbesondere glatt und/oder eben ausgebildet ist.

Vorteilhaft kann es sein, wenn das Fahrzeug eine mit dem Sandwichbauteil mechanisch verbundene Laderaumkabine aufweist, wobei eine an dem Sandwichbauteil angeordnete und/oder aus dem Sandwichbauteil gebildete Ladefläche des Fahrzeugs innerhalb der Laderaumkabine angeordnet ist.

Beispielsweise sind das Fahrwerk und/oder die vordere Fahrzeugachse und/oder die hintere Fahrzeugachse bezogen auf eine Höhenrichtung des Fahrzeugs an einer Unterseite des Sandwichbauteils angeordnet.

Beispielsweise ist die Fahrerkabine bezogen auf eine Höhenrichtung des Fahrzeugs an einer Oberseite des Sandwichbauteils angeordnet.

Beispielsweise ist die Fahrerkabine bezogen auf eine Fahrtrichtung des Fahrzeugs in einem Betriebszustand in einem vorderen Teilbereich des Sandwichbauteils an dem Sandwichbauteil angeordnet.

Beispielsweise weist das Sandwichbauteil in dem vorderen Teilbereich eine Verjüngung in Breitenrichtung auf.

Beispielsweise ist die Ladefläche bezogen auf eine Höhenrichtung des Fahrzeugs an einer Oberseite des Sandwichbauteils angeordnet.

Beispielsweise ist die Ladefläche bezüglich einer Fahrtrichtung des Fahrzeugs in einem hinteren Teilbereich des Sandwichbauteils angeordnet.

Insbesondere kann es vorgesehen sein, dass mindestens ein Befestigungselement des Sandwichbauteils an der Ladefläche angeordnet und/oder von der Ladefläche aus zugänglich ist.

Beispielsweise lässt sich mittels mindestens eines Befestigungselements des Sandwichbauteils ein Bauelement an der Ladefläche mit dem Sandwichbauteil des Fahrzeugs verbinden.

Das erfindungsgemäße Sandwichbauteil lässt sich beispielsweise für Container, Container-Transporter, Flughafen-Transportfahrzeuge, Teile von Gebäuden und/oder Böden von Flugzeugen oder Schiffen verwenden.

Erfindungsgemäß wird ein Verfahren zur Herstellung eines Sandwichbauteils für ein Fahrzeug, insbesondere Landfahrzeug und/oder Kraftfahrzeug, bereitgestellt, umfassend eine erste Decklage, eine zu der ersten Decklage beabstandete zweite Decklage, ein zwischen der ersten Decklage und der zweiten Decklage angeordnetes Kernmaterial und eine Mehrzahl von Fügeelementen, wobei mittels der Fügeelemente eine mechanische Verbindung zwischen der ersten Decklage und der zweiten Decklage hergestellt wird, sich die Fügeelemente zumindest abschnittsweise zwischen der ersten Decklage und der zweiten Decklage erstrecken und/oder die Fügeelemente zumindest abschnittsweise durch das Kernmaterial durchgeführt werden, mindestens ein Fügeelement mindestens ein Befestigungselement aufweist und/oder an mindestens einem Fügeelement mindestens ein Befestigungselement ausgebildet wird und wobei mittels des mindestens einen Befestigungselements eine mechanische Verbindung zwischen einem Bauelement und dem Sandwichbauteil herstellbar ist oder hergestellt ist.

Das erfindungsgemäße Verfahren weist ein oder mehrere Merkmale und/oder Vorteile des erfindungsgemäßen Sandwichelements und/oder des erfindungsgemäßen Fahrzeugs auf.

Das erfindungsgemäße Sandwichelement und/oder das erfindungsgemäße Fahrzeug sind mittels des erfindungsgemäßen Verfahrens herstellbar oder werden mittels des erfindungsgemäßen Verfahrens hergestellt.

Bei einer Variante des Verfahrens wird eine mechanische Verbindung der Fügeelemente mit der ersten Decklage hergestellt, eine mechanische Verbindung der zweiten Decklage mit den Fügeelementen hergestellt, welche mit der ersten Decklage mechanisch verbunden sind, und mindestens eine erste Öffnung an der ersten Decklage derart ausgebildet, dass mittels der mindestens einen ersten Öffnung mindestens ein der mindestens einen ersten Öffnung zugeordnetes Befestigungselement eines Fügeelement zugänglich ist, wobei die Ausbildung der mindestens einen ersten Öffnung vor oder nach der Herstellung der mechanischen Verbindung zwischen den Fügeelementen und der ersten Decklage erfolgt, und/oder es wird mindestens eine zweite Öffnung an der zweiten Decklage derart ausgebildet, dass mittels der mindestens einen zweiten Öffnung mindestens ein der mindestens einen zweiten Öffnung zugeordnetes Befestigungselement eines Fügeelement zugänglich ist, wobei die Ausbildung der mindestens einen zweiten Öffnung vor oder nach der Herstellung der mechanischen Verbindung zwischen den Fügeelementen und der zweiten Decklage erfolgt.

Insbesondere kann es vorgesehen sein, dass zwischen den Fügeelementen und der ersten Decklage und/oder der zweiten Decklage eine stoffschlüssige Verbindung hergestellt wird.

Beispielsweise wird zur Herstellung der stoffschlüssigen Verbindung ein Fügestoff, insbesondere Klebstoff, zwischen einem ersten Flanschbereich eines Fügeelements und der ersten Decklage und/oder zwischen einem zweiten Flanschbereich eines Fügeelements und der zweiten Decklage angeordnet.

Bei einer Variante des Verfahrens kann es vorgesehen sein, dass die Fügeelemente jeweils einen Schneidabschnitt und/oder einen Schneidringabschnitt und/oder ein selbstfurchendes Gewinde aufweisen.

Beispielsweise erfolgt die Ausbildung der ersten Öffnungen und/oder die Herstellung der mechanischen Verbindung der Fügeelemente mit der ersten Decklage durch Rotation der Fügeelemente und/oder durch Reibrührschweißen.

Insbesondere kann es vorgesehen sein, dass eine Ausbildung eines Befestigungselements und/oder eines Innengewindes an mindestens einem Fügeelement nach der Herstellung der mechanischen Verbindung zwischen dem mindestens einen Fügeelement und der ersten Decklage und/oder der zweiten Decklage erfolgt.

Insbesondere kann es vorgesehen sein, dass eine Ausbildung des Befestigungselements und/oder des Innengewindes an dem mindestens einen Fügeelement vor oder nach der Ausbildung der ersten Öffnungen an der ersten Decklage und/oder vor oder nach der Ausbildung der zweiten Öffnungen an der zweiten Decklage erfolgt.

Beispielsweise erfolgt die Ausbildung eines Befestigungselements und/oder eines Innengewindes an mindestens einem Fügeelement mittels einer Werkzeugeinrichtung zur Ausbildung der ersten Öffnungen und/oder der zweiten Öffnungen.

Vorteilhaft kann es sein, wenn die Ausbildung der mindestens einen ersten Öffnung und/oder der mindestens einen zweiten Öffnung nach der Herstellung der mechanischen Verbindung der Fügeelemente mit der ersten Decklage und/oder mit der zweiten Decklage erfolgt.

Insbesondere kann es vorgesehen sein, dass vor der Ausbildung der mindestens einen ersten Öffnung und/oder der mindestens einen zweiten Öffnung und/oder vor einer Anordnung der zweiten Decklage an den Fügeelementen eine Position von an der ersten Decklage angeordneten Fügeelementen und/oder von jeweiligen Befestigungselementen von an der ersten Decklage angeordneten Fügeelementen mittels einer Sensoreinrichtung erfasst wird, wobei insbesondere mittels der erfassten Positionen eine Steuerung einer Werkzeugeinrichtung zur Ausbildung der mindestens einen ersten Öffnung und/oder der mindestens einen zweiten Öffnung erfolgt.

Es kann vorgesehen sein, dass mittels der erfassten Positionen eine Steuerung der Werkzeugeinrichtung zur Ausbildung von mindestens einem Befestigungselement an einem jeweiligen Fügeelement erfolgt.

Günstig kann es sein, wenn das Kernmaterial während oder nach einer Herstellung einer mechanischen Verbindung der Fügeelemente mit der ersten Decklage und der zweiten Decklage zwischen der ersten Decklage und der zweiten Decklage angeordnet und/oder ausgebildet wird.

Vorteilhaft kann es sein, wenn zur Anordnung und/oder Ausbildung des Kernmaterials ein flüssiges Kernmaterial auf die erste Decklage aufgebracht und/oder aufgesprüht wird.

Insbesondere kann es vorgesehen sein, dass ein Aufbringen und/oder Aufsprühen eines flüssigen Kernmaterials auf die erste Decklage derart erfolgt, dass eine Kontaktierung der zweiten Decklage mit dem Kernmaterial in einem Bereich der zweiten Decklage erst erfolgt, nachdem dieser Bereich der zweiten Decklage mittels der Fügeelemente mit der ersten Decklage mechanisch verbunden ist.

Insbesondere kann es vorgesehen sein, dass das flüssige Kernmaterial nach Anordnung auf erste Decklage aushärtet und/oder sich verfestigt.

Insbesondere kann es vorgesehen sein, dass an dem Sandwichbauteil ein oder mehrere Stirnseitenelemente angeordnet und/oder ausgebildet werden, welche in Höhenrichtung des Sandwichbauteils zumindest abschnittsweise zwischen der ersten Decklage und der zweiten Decklage angeordnet sind. Es lässt sich dadurch insbesondere ein Auslaufen und/oder ein Austritt von flüssigem Kernmaterial während der Herstellung des Sandwichbauteils verhindern.

Beispielsweise ist unter einem Stirnweitenelement ein Stirnwandungselement und/oder ein an einer Stirnseite des Sandwichbauteils angeordnetes Wandungselement zu verstehen.

Beispielsweise erfolgt die Ausbildung der Stirnseitenelemente in einem Bereich der ersten Decklage, bevor in diesem Bereich ein flüssiges Kernmaterial aufgebracht und/oder aufgesprüht wird.

Insbesondere kann es vorgesehen sein, dass die Ausbildung der Stirnseitenelemente durch Umfaltung und/oder Umformung der ersten Decklage und/oder der zweiten Decklage erfolgt.

Bei einer Variante des Verfahrens wird ein festes Kernmaterial bereitgestellt, wobei das feste Kernmaterial zu den Fügeelementen korrespondierende Ausnehmungen zur Aufnahme und/oder Anordnung der Fügeelemente aufweist oder an dem festen Kernmaterial zu den Fügeelementen korrespondierende Ausnehmungen zur Aufnahme und/oder Anordnung der Fügeelemente ausgebildet werden.

Beispielsweise werden die Fügeelemente an den Ausnehmungen des festen Kernmaterials angeordnet und/oder ausgebildet.

Beispielsweise wird zur Ausbildung eines Fügeelements an dem festen Kernmaterial ein erster Teilkörper des Fügeelements an der Ausnehmung des Kernmaterials angeordnet und anschließend ein zweiter Teilkörper des Fügeelements an der Ausnehmung angeordnet und mit dem ersten Teilkörper verbunden.

Insbesondere kann es vorgesehen sein, dass das feste Kernmaterial und/oder die an dem festen Kernmaterial angeordneten Fügeelemente mit der ersten Decklage und/oder mit der zweiten Decklage mechanisch verbunden werden.

Insbesondere kann es vorgesehen sein, dass eine Ausbildung von ersten Öffnungen an der ersten Decklage und/oder von zweiten Öffnungen an der zweiten Decklage vor oder nach der Herstellung der mechanischen Verbindung erfolgt.

Bei einer Variante des Verfahrens werden erste Teilkörper von Fügeelementen bereitgestellt und es wird ein festes Kernmaterial bereitgestellt, wobei das feste Kernmaterial zu den ersten Teilkörpern korrespondierende Ausnehmungen zur Aufnahme und/oder Anordnung der ersten Teilkörper an dem festen Kernmaterial aufweist, das feste Kernmaterial und/oder die ersten Teilkörper mit der ersten Decklage mechanisch verbunden werden, wobei die ersten Teilkörper der Fügeelemente zumindest abschnittsweise innerhalb der Ausnehmungen des festen Kernmaterials angeordnet sind, zur Ausbildung der Fügeelemente an den ersten Teilkörpern jeweils zu den ersten Teilkörpern korrespondierende zweite Teilkörper der Fügeelemente angeordnet werden und wobei die zweite Decklage mit den Fügeelementen und/oder mit den zweiten Teilkörpern der Fügeelemente und/oder mit dem festen Kernmaterial mechanisch verbunden wird.

Diese Variante des Verfahrens weist insbesondere ein oder mehrere Merkmale und/oder Vorteile der vorstehend beschriebenen Varianten des Verfahrens auf.

Eine Ausbildung von ersten Öffnungen an der ersten Decklage und/oder von zweiten Öffnungen an der zweiten Decklage erfolgt insbesondere auf gleiche Weise wie bei den vorstehend beschriebenen Varianten des Verfahrens. Insoweit wird hinsichtlich der Ausbildung der ersten Öffnungen und/oder der zweiten Öffnungen auf die vorstehend genannten Merkmale und/oder Vorteile verwiesen.

Beispielsweise werden erste Teilkörper der Fügeelemente an der ersten Decklage angeordnet und anschließend wird das feste Kernmaterial an der ersten Decklage und/oder an den ersten Teilkörpern angeordnet, wobei die ersten Teilkörper in den Ausnehmungen des festen Kernmaterials angeordnet werden.

Alternativ hierzu werden erste Teilkörper in den Ausnehmungen des festen Kernmaterials angeordnet und anschließend wird das feste Kernmaterial mit den daran angeordneten ersten Teilkörpern an der ersten Decklage angeordnet.

Insbesondere kann es vorgesehen sein, dass eine stoffschlüssige Verbindung zwischen dem festen Kernmaterial und der ersten Decklage und/oder der zweiten Decklage hergestellt wird.

Bei einer weiteren Variante des Verfahrens wird mindestens ein Fügeelement bereitgestellt, welches als Kombinationselement ausgebildet ist, wobei das Kombinationselement ein Strukturmaterial aufweist und mindestens ein Befestigungselement, welches an dem Strukturmaterial angeordnet und/oder ausgebildet ist, wobei ein festes Kernmaterial bereitgestellt wird, das feste Kernmaterial mindestens eine Ausnehmung zur Aufnahme des Kombinationselements aufweist, das Kombinationselement mit dem festen Kernmaterial mechanisch und insbesondere stoffschlüssig verbunden wird.

Insbesondere wird das feste Kernmaterial, umfassend das mindestens eine Kombinationselement, mechanisch mit der ersten Decklage und/oder mit der zweiten Decklage verbunden.

Diese Variante des Verfahrens weist insbesondere ein oder mehrere Merkmale und/oder Vorteile der vorstehend beschriebenen Varianten auf.

Eine Ausbildung von ersten Öffnungen an der ersten Decklage und/oder von zweiten Öffnungen an der zweiten Decklage erfolgt insbesondere auf gleiche Weise wie bei den vorstehend beschriebenen Varianten des Verfahrens. Insoweit wird hinsichtlich der Ausbildung der ersten Öffnungen und/oder der zweiten Öffnungen auf die vorstehend genannten Merkmale und/oder Vorteile verwiesen.

Beispielsweise wird das Sandwichbauteil in einem Endlosverfahren hergestellt.

Es ist grundsätzlich auch möglich, dass die erste Decklage, das Kernmaterial und die zweite Decklage mechanisch miteinander verbunden werden und anschließend die Fügeelemente und/oder die Befestigungselemente angeordnet und/oder ausgebildet werden. Beispielsweise werden die Fügeelemente nachträglich an der ersten Decklage und/oder an der zweiten Decklage und/oder an dem Kernmaterial angeordnet. Beispielsweise werden die Fügeelemente nachträglich in die erste Decklage und/oder in die zweite Decklage und/oder in das Kernmaterial eingebracht.

Erfindungsgemäß wird eine Herstellungsvorrichtung zur Herstellung eines Sandwichbauteils für ein Fahrzeug, insbesondere Landfahrzeug und/oder Kraftfahrzeug, bereitgestellt, umfassend eine erste Bereitstellungseinrichtung zur Bereitstellung und/oder Förderung einer ersten Decklage, eine Fügeelement-Anordnungseinrichtung, wobei mittels der Fügeelement-Anordnungseinrichtung Fügeelemente an der ersten Decklage anordenbar sind und/oder ausbildbar sind und/oder mit der ersten Decklage mechanisch verbindbar sind, eine zweite Bereitstellungseinrichtung zur Bereitstellung und/oder Förderung einer zweiten Decklage, wobei die zweite Decklage mittels der zweiten Bereitstellungseinrichtung mit an der ersten Decklage angeordneten Fügeelementen mechanisch verbindbar ist und/oder wobei die zweite Decklage mittels der zweiten Bereitstellungseinrichtung mit einem an der ersten Decklage angeordneten Kernmaterial mechanisch verbindbar ist, und eine Werkzeugeinrichtung, insbesondere Bohreinrichtung und/oder Stanzeinrichtung, zur Ausbildung von ersten Öffnungen an der ersten Decklage und/oder von zweiten Öffnungen an der zweiten Decklage und/oder zur Ausbildung eines Befestigungselements an mindestens einem Fügeelement.

Die erfindungsgemäße Herstellungsvorrichtung weist ein oder mehrere Merkmale und/oder Vorteile des erfindungsgemäßen Verfahrens auf.

Das erfindungsgemäße Verfahren ist mittels der erfindungsgemäßen Herstellungsvorrichtung durchführbar oder wird mittels der erfindungsgemäßen Herstellungsvorrichtung durchgeführt.

Das erfindungsgemäße Sandwichbauteil und/oder das erfindungsgemäße Fahrzeug sind mittels der erfindungsgemäßen Herstellungsvorrichtung herstellbar.

Beispielsweise ist die Herstellungsvorrichtung als CNC-Maschine ausgebildet oder umfasst eine CNC-Maschine.

Beispielsweise ist mittels der Werkzeugeinrichtung der Herstellungsvorrichtung mindestens ein Befestigungselement und/oder ein Innengewinde an einem Fügeelement herstellbar.

Bei einer Ausführungsform umfasst die Herstellungsvorrichtung eine Sensoreinrichtung zur Erfassung einer Position von an der ersten Decklage angeordneten Fügeelementen und/oder von ersten Teilkörpern von an der ersten Decklage angeordneten Fügeelementen und/oder von zweiten Teilkörpern von an der ersten Decklage angeordneten Fügeelementen und/oder von Befestigungselementen von an der ersten Decklage angeordneten Fügeelementen.

Bei einer Ausführungsform umfasst die Herstellungsvorrichtung eine Fügestoff-Bereitstellungseinrichtung zur Anordnung eines Fügestoffs, insbesondere eines Klebstoffs, an der ersten Decklage und/oder an der zweiten Decklage und/oder an den Fügeelementen und/oder an einem festen Kernmaterial.

Bei einer Ausführungsform umfasst die Herstellungsvorrichtung eine Umformungseinrichtung zur Ausbildung von mindestens einem Stirnseitenelement an dem Sandwichbauteil mittels Umformung und/oder Umfaltung der ersten Decklage und/oder der zweiten Decklage.

Bei einer Ausführungsform umfasst die Herstellungsvorrichtung eine Kernmaterial-Anordnungseinrichtung zur Anordnung und/oder Ausbildung eines festen und/oder flüssigen Kernmaterials auf der ersten Decklage.

Bei einer Ausführungsform umfasst die Herstellungsvorrichtung eine Steuerungseinrichtung, welche mit einer Sensoreinrichtung der Herstellungsvorrichtung und/oder mit der ersten Bereitstellungseinrichtung und/oder mit der zweiten Bereitstellungseinrichtung und/oder mit der Fügeelement-Anordnungseinrichtung und/oder mit der Werkzeugeinrichtung und/oder mit einer Kernmaterial-Anordnungseinrichtung der Herstellungsvorrichtung und/oder mit einer Fügestoff-Bereitstellungseinrichtung der Herstellungsvorrichtung und/oder mit einer Umformungseinrichtung der Herstellungsvorrichtung signalwirksam verbunden ist.

Insbesondere kann es vorgesehen sein, dass mittels der Steuerungseinrichtung eine Anordnungsgeschwindigkeit und/oder eine Förderrate von flüssigem Kernmaterial steuerbar und/oder regelbar sind.

Insbesondere kann es vorgesehen sein, dass mittels der Steuerungseinrichtung ein Arbeitsvorschub und/oder eine Fördergeschwindigkeit der ersten Decklage steuerbar und/oder regelbar sind.

Insbesondere kann es vorgesehen sein, dass mittels der Steuerungseinrichtung ein Arbeitsvorschub und/oder eine Fördergeschwindigkeit der zweiten Decklage steuerbar und/oder regelbar sind.

Insbesondere kann es vorgesehen sein, dass mittels der Steuerungseinrichtung eine Position von mittels der Werkzeugeinrichtung auszubildenden ersten Öffnungen an der ersten Decklage und/oder zweiten Öffnungen an der zweiten Decklage steuerbar und/oder regelbar ist.

Insbesondere kann es vorgesehen sein, dass mittels der Steuerungseinrichtung eine Position von mittels der Fügeelement-Anordnungseinrichtung anzuordnenden Fügeelementen und/oder Befestigungselementen von Fügeelementen steuerbar und/oder regelbar ist.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen Querschnitt eines Ausführungsbeispiels eines Fahrzeugs, welches ein Sandwichbauteil umfasst, wobei das Sandwichbauteil als tragendes Strukturbauteil des Fahrzeugs dient;
- Fig. 2: einen weiteren schematischen Querschnitt des Fahrzeugs gemäß Fig. 1, wobei ein vorderer Teilbereich des Fahrzeugs gezeigt ist, in welchem an dem Sandwichbauteil eine Fahrerkabine angeordnet ist;
- Fig. 3: einen schematischen Querschnitt eines Abschnitts eines Sandwichbauteils, wobei eine erste Decklage und eine zweite Decklage des Sandwichbauteils mittels eines Fügeelements mechanisch verbunden sind und wobei das Fügeelement einen ersten Teilkörper und einen zweiten Teilkörper aufweist;
- Fig. 4: einen schematischen Querschnitt eines Abschnitts eines Sandwichbauteils, wobei ein Aufnahmeelement vorgesehen ist, welches zwischen einer ersten Deckplatte und einer zweiten Deckplatte des Sandwichbauteils angeordnet ist und/oder in das Sandwichbauteil eingebettet ist;
- Fig. 5: einen schematischen Querschnitt eines Abschnitts eines Sandwichbauteils, wobei ein Aufnahmeelement vorgesehen ist, welches lösbar mit mindestens einem Befestigungselement des Sandwichbauteils verbunden ist;
- Fig. 6: einen schematischen Querschnitt eines Abschnitts eines Kernmaterials eines Sandwichbauteils, wobei das Kernmaterial eine Ausnehmung zur Aufnahme eines als Kombinationselement ausgebildeten Fügeelements aufweist;
- Fig. 7: einen schematischen Querschnitt eines Abschnitts eines Sandwichbauteils, wobei ein Fügeelement zur mechanischen Verbindung einer ersten Deckplatte und einer zweiten Deckplatte des Sandwichbauteils als Kombinationselement ausgeführt ist;
- Fig. 8: eine schematische Darstellung eines Ausführungsbeispiels einer Herstellungsvorrichtung für ein Sandwichbauteil, wobei mittels einer Werkzeugeinrichtung an einer zweiten Decklage eines herzustellenden Sandwichbauteils zweite Öffnungen ausgebildet werden, bevor die zweite Decklage mechanisch mit Fügeelementen des Sandwichbauteils verbunden wird;
- Fig. 9: eine schematische Darstellung eines weiteren Ausführungsbeispiels einer Herstellungsvorrichtung für ein Sandwichbauteil, wobei erste Öffnungen der ersten Decklage und/oder zweite Öffnungen der zweiten Decklage ausgebildet werden, nachdem die zweite Decklage mechanisch mit den Fügeelementen des Sandwichbauteils verbunden wurde;
- Fig. 10: eine schematische Darstellung eines weiteren Ausführungsbeispiels einer Herstellungsvorrichtung für ein Sandwichbauteil, wobei bei der Herstellung ein festes Kernmaterial verwendet wird und/oder wobei die Fügeelemente aus einem ersten Teilkörper und einem zweiten Teilkörper ausgebildet werden;
- Fig. 11: einen schematischen Querschnitt eines festen Kernmaterials, an welchem erste Teilelemente von Ausnehmungen ausgebildet werden;
- Fig. 12: einen schematischen Querschnitt eines festen Kernmaterials, an welchem zweite Teilelemente von Ausnehmungen ausgebildet werden;
- Fig. 13: einen schematischen Querschnitt eines festen Kernmaterials mit daran ausgebildeten Ausnehmungen, wobei in die Ausnehmungen erste Teilkörper von Fügeelementen eingesetzt werden;
- Fig. 14: einen schematischen Querschnitt eines festen Kernmaterials mit daran ausgebildeten Ausnehmungen und daran angeordneten ersten Teilkörpern von Fügeelementen, wobei in die Ausnehmungen zweite Teilkörper von Fügeelementen eingesetzt werden und die zweiten Teilkörper mit den ersten Teilkörpern verbunden werden;
- Fig. 15: eine schematische Darstellung eines festen Kernmaterials mit daran angeordneten Fügeelementen, wobei an dem festen Kernmaterial eine zweite Decklage angeordnet wird; und
- Fig. 16: einen schematischen Querschnitt eines Sandwichbauteils mit integrierten Fügeelementen und/oder Befestigungselementen.

Gleiche oder funktional äquivalente Elemente sind in sämtlichen Figuren mit denselben Bezugszeichen versehen.

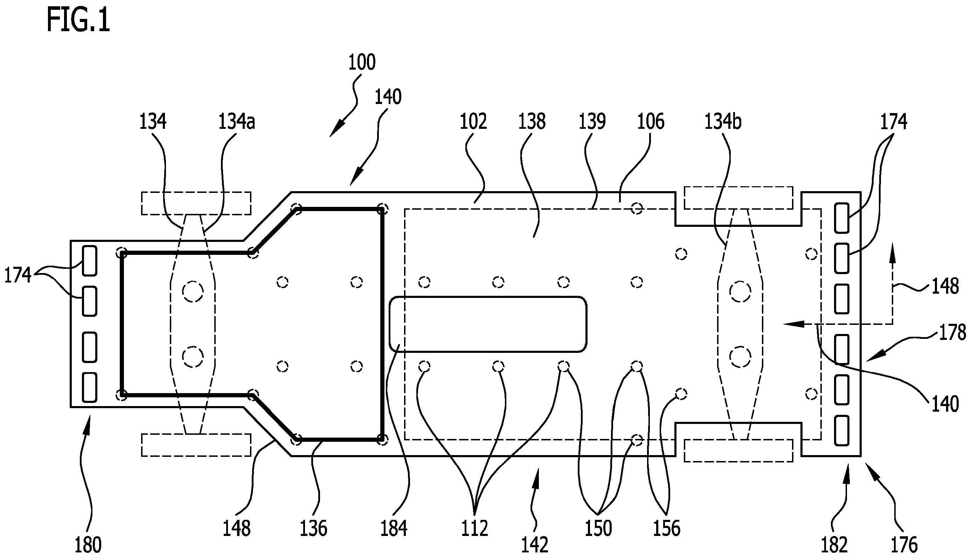

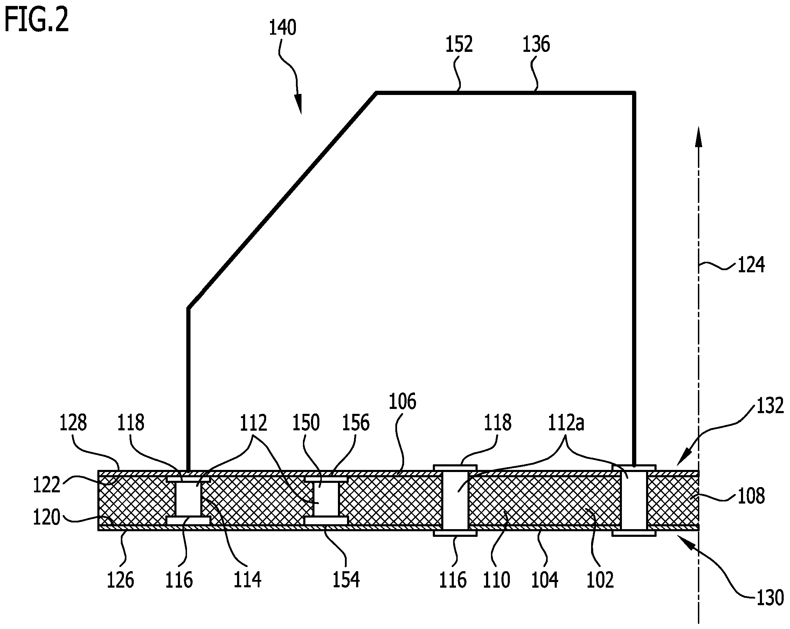

Ein Ausführungsbeispiel eines Fahrzeugs, welches in den Fig. 1 und 2 schematisch gezeigt und dort mit 100 bezeichnet ist, umfasst ein Sandwichbauteil 102, welches als tragendes Strukturbauteil dient. Beispielsweise ist das Fahrzeug 100 ein Kraftfahrzeug, wie z.B. ein Kleintransporter.

Das Sandwichbauteil weist eine erste Decklage 104 und eine zu der ersten Decklage 104 beabstandete zweite Decklage 106 auf. Die erste Decklage 104 und/oder die zweite Decklage 106 sind insbesondere als Blech, z.B. als Aluminiumblech, ausgeführt.

Zwischen der ersten Decklage 104 und der zweiten Decklage 106 ist ein Zwischenraum 108 angeordnet und/oder ausgebildet. Innerhalb dieses Zwischenraums 108 ist ein Kernmaterial 110 des Sandwichbauteils 102 angeordnet.

Das Kernmaterial 110 ist oder umfasst beispielsweise ein Schaummaterial und insbesondere ein Kunststoffschaummaterial.

Es kann vorgesehen sein, dass das Kernmaterial 110 stoffschlüssig, z.B. mittels Klebstoff, mit der ersten Decklage 104 und/oder der zweiten Decklage 106 verbunden ist.

Das Sandwichbauteil 102 weist eine Vielzahl von Fügeelementen 112 auf, mittels welchen eine mechanische Verbindung zwischen der ersten Decklage 104 und der zweiten Decklage 106 hergestellt ist. Die Fügeelemente 112 sind zumindest abschnittsweise und/oder vollständig innerhalb des Zwischenraums 108 angeordnet.

Beispielsweise erstrecken sich die Fügeelemente 112 zumindest abschnittsweise und/oder vollständig zwischen der ersten Decklage 104 und der zweiten Decklage 106.

Das Kernmaterial 110 weist zu den Fügeelementen 112 korrespondierende Ausnehmungen 114 auf, durch welche die Fügeelemente 112 verlaufen und/oder durchgeführt sind.

Die Fügeelemente 112 sind insbesondere jeweils formschlüssig und/oder kraftschlüssig und/oder stoffschlüssig mit der ersten Decklage 104 und/oder mit der zweiten Decklage 106 verbunden.

Die Fügeelemente 112 weisen beispielsweise jeweils einen ersten Flanschbereich 116 und/oder einen zweiten Flanschbereich 118 auf.

Der erste Flanschbereich 116 liegt beispielsweise an einer ersten Innenseite 120 des Sandwichbauteils 102 an, wobei die erste Innenseite 120 an der ersten Decklage 104 ausgebildet ist. Der zweite Flanschbereich 118 liegt beispielsweise an einer zweiten Innenseite 122 des Sandwichbauteils 102 an, welche an der zweiten Decklage 106 ausgebildet ist.

Beispielsweise begrenzen die erste Innenseite 120 und die zweite Innenseite 122 den Zwischenraum 108 in einer Höhenrichtung 124 des Sandwichbauteils 102 und/oder des Fahrzeugs 100.

Insbesondere ist an dem ersten Flanschbereich 116 und/oder mittels des ersten Flanschbereichs 116 eine mechanische Verbindung des Fügeelements 112 mit der ersten Decklage 104 hergestellt. Insbesondere ist an dem zweiten Flanschbereich 118 und/oder mittels des zweiten Flanschbereichs 118 eine mechanische Verbindung zwischen dem Fügeelement 112 und der zweiten Decklage 106 hergestellt.

Das Sandwichbauteil 102 weist eine erste Außenseite 126 und eine zweite Außenseite 128 auf. Die erste Außenseite 126 ist an der ersten Decklage 104 angeordnet und/oder aus der ersten Decklage 104 gebildet. Die zweite Außenseite 128 ist an der zweiten Decklage 106 angeordnet und/oder aus der zweiten Decklage 106 gebildet.

Die erste Außenseite 126 und/oder die zweite Außenseite 128 sind insbesondere glatt und/oder eben ausgebildet.

Bei einer Ausführungsform des Sandwichbauteils 102 kann es vorgesehen sein, dass eine mechanische Verbindung zwischen der ersten Decklage 104 und der zweiten Decklage 106 mittels Fügeelementen 112a hergestellt ist, wobei der erste Flanschbereich 116 des Fügeelements 112a an der ersten Außenseite 126 anliegt und/oder der zweite Flanschbereich 118 des Fügeelements 112a an der zweiten Außenseite 128 anliegt.

Beispielsweise ragen die Fügeelemente 112a in Höhenrichtung 124 zumindest abschnittsweise über die erste Außenseite 126 und/oder die zweite Außenseite 128 hinaus.

Bei dem in den Fig. 1 und 2 gezeigten Ausführungsbeispiel ist die erste Außenseite 126 bezüglich der Höhenrichtung 124 eine Unterseite 130 des Sandwichbauteils 102 und/oder des Fahrzeugs 100. Die zweite Außenseite 128 ist bezüglich der Höhenrichtung 124 eine Oberseite 132 des Sandwichbauteils 102.

Beispielsweise ist aus der ersten Decklage 104 zumindest abschnittsweise ein Unterboden des Fahrzeugs 100 gebildet.

An der Unterseite 130 sind beispielsweise ein Fahrwerk 134 und/oder eine vordere Fahrzeugachse 134a und/oder eine hintere Fahrzeugachse 134b des Fahrzeugs 100 angeordnet und/oder mit dem Sandwichbauteil 102 mechanisch verbunden.

An der Oberseite 132 ist beispielsweise eine Fahrerkabine 136 und/oder Fahrgastzelle des Fahrzeugs 100 an dem Sandwichbauteil 102 angeordnet und/oder mechanisch mit dem Sandwichbauteil 102 verbunden.

Beispielsweise ist an der Oberseite 132 eine Ladefläche 138 und/oder ein Ladebereich des Fahrzeugs 100 angeordnet. Insbesondere ist die Ladefläche 138 zumindest abschnittsweise aus der zweiten Decklage 106 des Sandwichbauteils 102 gebildet.

Es kann vorgesehen sein, dass das Fahrzeug 100 eine Laderaumkabine 139 aufweist (angedeutet in Fig. 1), welche mit dem Sandwichbauteil 102 mechanisch verbunden ist. Die Ladefläche 138 ist beispielsweise innerhalb der Laderaumkabine 139 angeordnet und/oder von der Laderaumkabine 139 aus zugänglich.

Die Fahrerkabine 136 ist bezüglich einer Längenrichtung 140 des Fahrzeugs 100 und/oder des Sandwichbauteils 102 in einem vorderen Teilbereich 142 des Fahrzeugs 100 und/oder des Sandwichbauteils 102 angeordnet.

Die Ladefläche 138 und/oder die Laderaumkabine 139 sind bezüglich der Längenrichtung 140 in einem hinteren Teilbereich 144 des Fahrzeugs 100 und/oder des Sandwichbauteils 102 angeordnet.

Es kann vorgesehen sein, dass das Sandwichbauteil 102 in dem vorderen Teilbereich 140 eine Verjüngung 146 in Breitenrichtung 148 aufweist, wobei die Breitenrichtung 148 quer und insbesondere senkrecht zu der Längenrichtung 140 orientiert ist.

Die Fügeelemente 112 des Sandwichbauteils 102 weisen jeweils ein oder mehrere Befestigungselemente 150 auf, mittels welchen sich eine mechanische Verbindung zwischen einem Bauelement 152 und dem Sandwichbauteil 102 herstellen lässt. Beispielsweise lässt sich mittels des Befestigungselements 150 zwischen dem Bauelement 152 und dem Sandwichbauteil 102 eine formschlüssige und/oder kraftschlüssige Verbindung herstellen.

Unter dem Bauelement 152 ist beispielsweise ein mit dem Sandwichbauteil 102 und/oder dem Fahrzeug 100 vorübergehend und/oder lösbar und/oder dauerhaft verbundenes oder verbindbares Element zu verstehen.

Bei dem gezeigten Ausführungsbeispiel sind das Fahrwerk 134 und/oder die Fahrerkabine 136 und/oder die Laderaumkabine 139 jeweils Bauelemente 152 des Fahrzeugs 100, welche mit dem Sandwichbauteil 102 mechanisch verbunden sind.

An der ersten Decklage 104 sind ein oder mehrere erste Öffnungen 154 ausgebildet, wobei eine jeweilige erste Öffnung 154 insbesondere einem Fügeelement 112 zugeordnet ist. Insbesondere ist eine jeweilige erste Öffnung 154 mindestens einem Befestigungselement 150 zugeordnet, welches an einem bestimmten Fügeelement 112 ausgebildet ist.

Durch die ersten Öffnungen 154 und/oder mittels der ersten Öffnungen 154 sind das Befestigungselement 150 oder die Befestigungselemente 150 eines jeweiligen Fügeelements 112 zugänglich.

Die zweite Decklage 106 weist ein oder mehrere zweite Öffnungen 156 auf, welche grundsätzlich gleichartig ausgebildet sind wie die ersten Öffnungen 154. Insbesondere sind das Befestigungselement 150 oder die Befestigungselemente 150 eines jeweiligen Fügeelements 112 mittels einer jeweiligen diesem Fügeelement 112 zugeordneten zweiten Öffnung 156 zugänglich.

Beispielsweise sind einem bestimmten Fügeelement 112 und/oder dem mindestens einen Befestigungselement 150 eines bestimmten Fügeelements 112 eine an der ersten Decklage 104 ausgebildete erste Öffnung 154 und eine an der zweiten Decklage 106 ausgebildete zweite Öffnung 156 zugeordnet.

Beispielsweise sind eine jeweilige erste Öffnung 154 und/oder eine jeweilige zweite Öffnung 156 und/oder ein jeweiliges Fügeelement 112 und/oder ein jeweiliges Befestigungselement 150 fluchtend zueinander ausgerichtet.

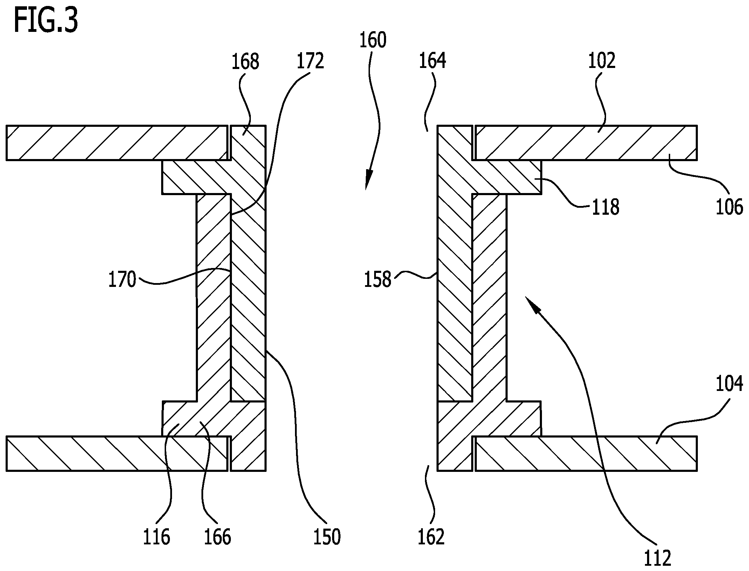

Das Befestigungselement 150 eines Fügeelements 112 ist oder umfasst beispielsweise ein Innengewinde 158 (Fig. 3). Mittels dieses Innengewindes 158 lässt sich beispielsweise eine Schraubverbindung zwischen dem Anbauelement 152 und dem Befestigungselement 150 herstellen.

Beispielsweise sind das Befestigungselement 150 und/oder das Innengewinde 158 in einem Innenbereich 160 des Fügeelements 112 angeordnet und/oder ausgebildet.

Der Innenbereich 160 ist beispielsweise mittels und/oder durch eine erste Öffnung 162 und/oder eine zweite Öffnung 164 des Fügeelements 112 zugänglich.

Die zweite Öffnung 164 ist zu der ersten Öffnung 162 beabstandet angeordnet. Zwischen der ersten Öffnung 162 und der zweiten Öffnung 164 sind der Innenbereich 160 und/oder das Innengewinde 158 angeordnet.

Beispielsweise liegt die erste Öffnung 162 an und/oder in der jeweiligen ersten Öffnung 154 der ersten Decklage 104. Beispielsweise liegt die zweite Öffnung 164 an und/oder in der jeweiligen zweiten Öffnung 156 der zweiten Decklage 106.

Bei einer Ausführungsform weist das Fügeelement 112 einen ersten Teilkörper 166 und einen mit dem ersten Teilkörper 166 verbindbaren oder verbundenen zweiten Teilkörper 168 auf.

An dem ersten Teilkörper 166 sind beispielsweise der erste Flanschbereich 116 und/oder die erste Öffnung 162 des Fügeelements 112 angeordnet und/oder ausgebildet.

An dem zweiten Teilkörper 168 sind beispielsweise der zweite Flanschbereich 118 und/oder die zweite Öffnung 164 angeordnet und/oder ausgebildet.

Zur mechanischen Verbindung des zweiten Teilkörpers 168 mit dem ersten Teilkörper 166 weist der erste Teilkörper 166 beispielsweise ein Innengewinde 170 auf und der zweite Teilkörper 168 weist ein zu diesem Innengewinde 170 korrespondierendes Außengewinde 172 auf. Beispielsweise ist der zweite Teilkörper 168 mittels des Außengewindes 172 in das Innengewinde 170 des ersten Teilkörpers 166 einschraubbar oder eingeschraubt.

An dem zweiten Teilkörper 168 ist beispielsweise das Innengewinde 158 des Fügeelements 112 angeordnet und/oder ausgebildet.

Beispielsweise wird der Innenbereich 160 des Fügeelements 112 in zwei von drei Raumrichtungen von dem ersten Teilkörper 166 und/oder von dem zweiten Teilkörper 168 begrenzt.

Bei einer Ausführungsform weist das Sandwichbauteil 102 ein oder mehrere Ausnehmungen 174 auf, welche insbesondere zur Energieabsorption im Fall äußerer Krafteinwirkung auf das Fahrzeug 100 und/oder auf das Sandwichbauteil 102 eingerichtet und ausgebildet sind.

Beispielsweise sind ein oder mehrere Ausnehmungen 174 in mindestens einem Eckbereich 176 und/oder Kantenbereich 178 des Sandwichbauteils 102 angeordnet und/oder ausgebildet.

Bei dem in Fig. 1 gezeigten Beispiel ist eine Mehrzahl von Ausnehmungen 174 beispielsweise in einem ersten und/oder vorderen Endbereich 180 des Sandwichbauteils 102 und/oder des Fahrzeugs 100 angeordnet.

Alternativ oder zusätzlich ist eine Mehrzahl von Ausnehmungen 174 beispielsweise in einem zu dem ersten Endbereich 180 beabstandeten zweiten und/oder hinteren Endbereich 182 des Sandwichbauteils 102 und/oder des Fahrzeugs 100 angeordnet.

Die Ausnehmungen 174 erstrecken sich beispielsweise in Höhenrichtung 124 durch das Sandwichbauteil 102.

Beispielsweise erstrecken sich die Ausnehmungen 174 durch die erste Decklage 104 und/oder die zweite Decklage 106 und/oder das Kernmaterial 110.

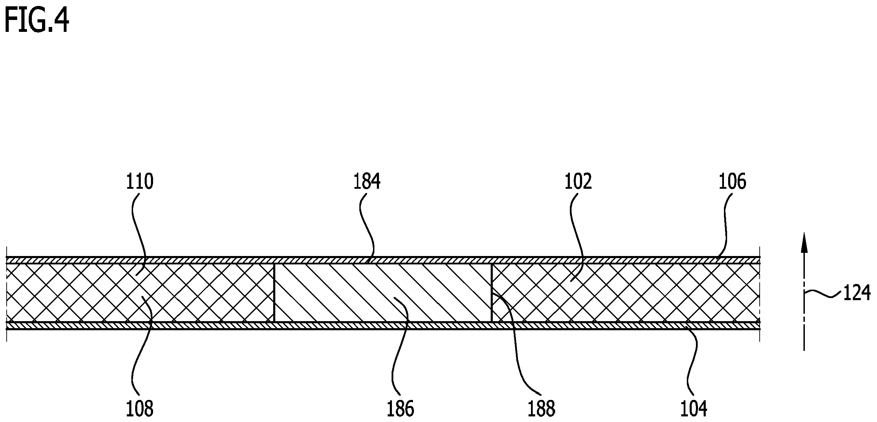

Bei einer Ausführungsform umfasst das Sandwichbauteil 102 ein Aufnahmeelement 184, mittels welchem ein Bauteil 186 aufnehmbar ist und/oder zumindest abschnittsweise innerhalb des Sandwichbauteils 102 anordenbar ist (Fig. 4).

Beispielsweise ist das Aufnahmeelement als Batteriegehäuse ausgebildet. Das Bauteil 186 ist beispielsweise eine Batterie, insbesondere Fahrzeugbatterie.

Bei der in Fig. 4 gezeigten Ausführungsform ist das Aufnahmeelement 184 in das Sandwichbauteil 102 integriert.

Das Aufnahmeelement 184 ist insbesondere vollständig innerhalb des Zwischenraums 108 angeordnet und/oder ragt in Höhenrichtung 124 nicht über die erste Decklage 104 und/oder die zweite Decklage 106 hinaus.

Das Aufnahmeelement 184 ist beispielsweise in das Kernmaterial 110 eingebettet und/oder integriert. Beispielsweise weist das Kernmaterial 110 eine zu einer Form des Aufnahmeelements 184 korrespondierende Ausnehmung 188 auf, in welcher das Aufnahmeelement 184 angeordnet ist.

Bei der in Fig. 4 gezeigten Ausführungsform ist das Aufnahmeelement 184 an dem Sandwichbauteil 102 insbesondere nicht von außen zugänglich und/oder nicht von dem Sandwichbauteil 102 lösbar.

Es kann vorgesehen sein, dass das Aufnahmeelement 184 stoffschlüssig mit dem Kernmaterial 110 und/oder mit der ersten Decklage 104 und/oder mit der zweiten Decklage 106 verbunden ist.

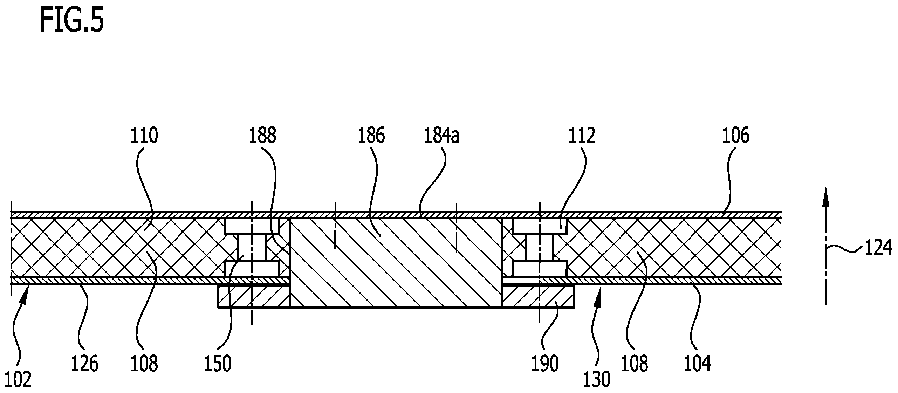

Alternativ oder zusätzlich kann ein Aufnahmeelement 184a vorgesehen sein, welches lösbar mit dem Sandwichbauteil 102 verbindbar ist oder verbunden ist (Fig. 5).

Das Aufnahmeelement 184a weist insbesondere ein oder mehrere Merkmale und/oder Vorteile des vorstehend beschriebenen Aufnahmeelements 184 auf.

Bei der in Fig. 5 gezeigten Ausführungsform ist das Aufnahmeelement 184a zumindest abschnittsweise innerhalb der Ausnehmung 188 des Kernmaterials 110 angeordnet.

Beispielsweise ragt das Aufnahmeelement 184a in Höhenrichtung 124 über die erste Deckplatte 104 und/oder über die zweite Deckplatte 106 des Sandwichbauteils 102 hinaus.

Beispielsweise weist das Aufnahmeelement 184a einen Flanschbereich 190 auf, welcher an der ersten Außenseite 126 des Sandwichbauteils 102 anliegt und/oder an die erste Außenseite 126 anlegbar ist.

Das Aufnahmeelement 184a ist, beispielsweise mittels des Flanschbereichs 190, mit einem oder mehreren Befestigungselementen 150 des Sandwichbauteils 102 lösbar verbindbar oder lösbar verbunden. Beispielsweise lässt sich das Aufnahmeelement 184a mittels einer Schraubverbindung mit einem oder mehreren Befestigungselementen 150 lösbar verbinden.

Bei dem in Fig. 5 gezeigten Beispiel ist das Aufnahmeelement 184a an der ersten Außenseite 126 und/oder der Unterseite 130 des Sandwichbauteils 102 und/oder des Fahrzeugs 100 zugänglich. Es lässt sich dadurch beispielsweise das Aufnahmeelement 184a von der Unterseite 130 her von dem Fahrzeug 100 lösen und/oder mit diesem verbinden.

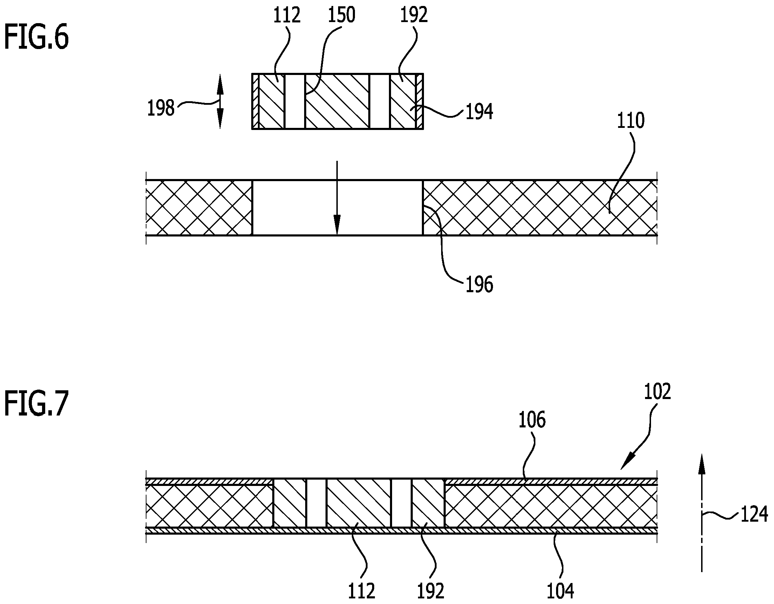

Es kann vorgesehen sein, dass ein oder mehrere Fügeelemente 112 des Sandwichbauteils 102 als Kombinationselement 192 ausgeführt sind (Fig. 6 und 7).

Dieses Kombinationselement 192 umfasst ein Strukturmaterial 194 und ein oder mehrere Befestigungselemente 150, welche an dem Strukturmaterial 194 angeordnet sind. Das Strukturmaterial 194 ist oder umfasst beispielsweise Holz.

Beispielsweise sind ein oder mehrere Befestigungselemente 150 stoffschlüssig mit dem Strukturmaterial 194 verbunden und/oder in das Strukturmaterial 194 eingebettet und/oder in das Strukturmaterial 194 integriert.

Beispielsweise ist das Befestigungselement 150 aus Stahl hergestellt.

Das Kernmaterial 110 weist eine Ausnehmung 196 zur Aufnahme des Kombinationselements 192 auf. Beispielsweise ist das Kombinationselement 192 in der Ausnehmung 196 angeordnet und/oder mit dem Kernmaterial 110 stoffschlüssig verbunden.

Eine Höhe 198 und/oder Dicke des Kombinationselements 192 entspricht beispielsweise einem kürzesten Abstand zwischen der ersten Deckplatte 104 und der zweiten Deckplatte 106 in Höhenrichtung 124.

Beispielsweise ist das Kombinationselement 192 zwischen der ersten Deckplatte 104 und der zweiten Deckplatte 106 angeordnet. Beispielsweise ist das Kombinationselement 192 stoffschlüssig mit der ersten Deckplatte 104 und/oder der zweiten Deckplatte 106 verbunden.

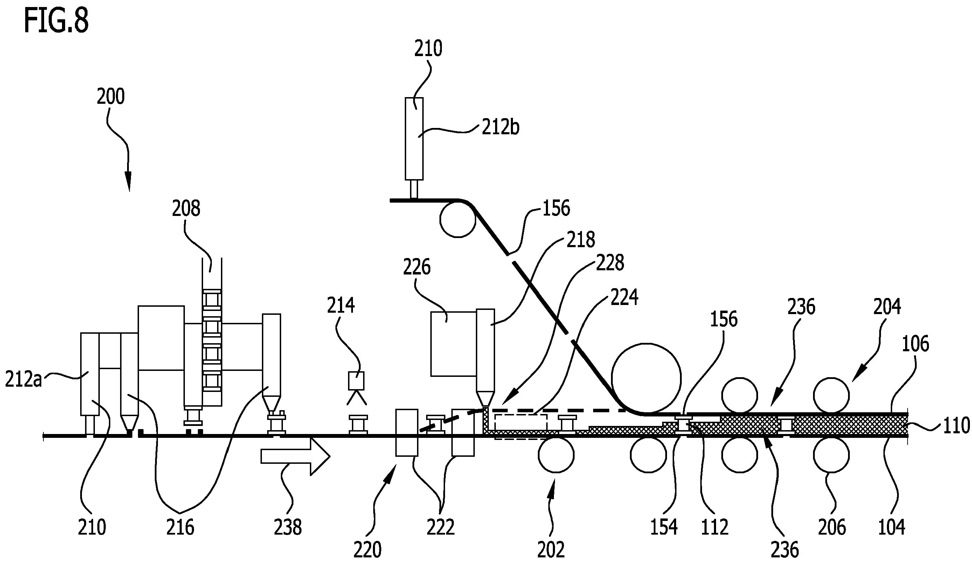

Ein Ausführungsbeispiel einer Herstellungsvorrichtung zur Herstellung des Sandwichbauteils 102 ist in Fig. 8 gezeigt und dort mit 200 bezeichnet.

Beispielsweise ist die Herstellungsvorrichtung 200 als Werkzeugmaschine und/oder CNC-Maschine ausgebildet.

Die Herstellungsvorrichtung 200 umfasst eine erste Bereitstellungseinrichtung 202, mittels welcher die erste Decklage 104 und/oder ein Vorläufer der ersten Decklage 104 bereitstellbar und/oder förderbar ist.

Weiter umfasst die Herstellungsvorrichtung 200 eine zweite Bereitstellungseinrichtung 204 zur Bereitstellung und/oder Förderung der zweiten Decklage 106 und/oder eines Vorläufers der zweiten Decklage 106.

Die erste Bereitstellungseinrichtung 202 und/oder die zweite Bereitstellungseinrichtung 204 weisen beispielsweise jeweils ein oder mehrere Fördererelemente 206 auf, mittels welchen die erste Decklage 104 und/oder die zweite Decklage 106 anordenbar und/oder förderbar und/oder anpressbar sind. Beispielsweise sind die Förderelemente 206 als Rollen ausgebildet.

Zur Anordnung der Fügeelemente 112 weist die Herstellungsvorrichtung 200 eine Fügeelement-Anordnungseinrichtung 208 auf. Mittels dieser Fügeelement-Anordnungseinrichtung 208 lassen sich Fügeelemente 112 an der ersten Decklage 104 anordnen und/oder mit der ersten Decklage 104 mechanisch verbinden.

Zur Herstellung der ersten Öffnungen 154 und/oder der zweiten Öffnungen 156 an der ersten Decklage 104 und/oder an der zweiten Decklage 106 umfasst die Herstellungsvorrichtung 200 eine Werkzeugeinrichtung 210, welche beispielsweise ein oder mehrere Werkzeugelemente 212 umfasst.

Das Werkzeugelement 212 ist oder umfasst beispielsweise ein Bohr- oder Stanzelement zur Ausbildung von Öffnungen an der ersten Decklage 104 und/oder an der zweiten Decklage 106.

Beispielsweise sind der Werkzeugeinrichtung 210 ein erstes Werkzeugelement 212a zur Ausbildung der ersten Öffnungen 154 an der ersten Decklage 104 zugeordnet und/oder ein zweites Werkzeugelement 212b zur Ausbildung der zweiten Öffnungen 156 an der zweiten Decklage 106 zugeordnet.

Es kann vorgesehen sein, dass die Herstellungsvorrichtung 200 eine Sensoreinrichtung 214 aufweist, wobei mittels der Sensoreinrichtung 214 eine Position von an der ersten Decklage 104 angeordneten Fügeelementen 112 und/oder ersten Öffnungen 154 erfassbar ist oder erfasst wird.

Insbesondere wird mittels der Sensoreinrichtung 214 eine Position der an der ersten Decklage 104 angeordneten Fügeelemente 112 und/oder ersten Öffnungen 154 ermittelt, bevor die zweite Decklage 106 an den Fügeelementen 112 angeordnet wird und/oder bevor die zweite Decklage 106 mittels der Fügeelemente 112 mit der ersten Decklage 104 mechanisch verbunden wird.

Es kann vorgesehen sein, dass die Herstellungsvorrichtung 200 eine Fügestoff-Bereitstellungseinrichtung 216 aufweist, mittels welcher sich ein Fügestoff an der ersten Decklage 104 und/oder an den Fügeelementen 112 anordnen lässt.

Der Fügestoff ist beispielsweise ein Klebstoff zur Herstellung einer stoffschlüssigen Verbindung.

Bei einer Ausführungsform umfasst die Herstellungsvorrichtung 200 eine Kernmaterial-Anordnungseinrichtung 218, mittels welcher sich ein flüssiges und/oder festes Kernmaterial 110 an den Fügeelementen 112 und/oder an der ersten Decklage 104 anordnen lässt.

Weiter kann es vorgesehen sein, dass die Herstellungsvorrichtung 200 eine Umformungseinrichtung 220 aufweist, welche beispielsweise ein oder mehrere Rollenelemente 222 umfasst.

Mittels der Umformungseinrichtung 220 lassen sich beispielsweise jeweilige Ränder der ersten Decklage 104 und/oder der zweiten Decklage 106 aufstellen und/oder umklappen.

Beispielsweise lassen sich mittels der Umformungseinrichtung 220 ein oder mehrere Stirnseitenelemente 224 ausbilden, welche in Höhenrichtung 124 zumindest abschnittsweise zwischen der ersten Decklage 104 und der zweiten Decklage 106 angeordnet sind. Mittels dieser Stirnseitenelemente 224 lässt sich beispielsweise ein Austritt und/oder ein Auslaufen von flüssigem Kernmaterial 110 während der Herstellung des Sandwichbauteils 102 verhindern.

Insbesondere kann es vorgesehen sein, dass die Herstellungsvorrichtung 200 eine Steuerungseinrichtung 226 aufweist, welche mit der Sensoreinrichtung 214 und/oder mit der ersten Bereitstellungseinrichtung 202 und/oder mit der zweiten Bereitstellungseinrichtung 204 und/oder mit der Fügeelement-Anordnungseinrichtung 208 und/oder mit der Werkzeugeinrichtung 210 und/oder mit der Kernmaterial-Anordnungseinrichtung 218 und/oder mit der Fügestoff-Bereitstellungseinrichtung 216 und/oder mit der Umformungseinrichtung 220 signalwirksam verbunden ist.

Bei der in Fig. 8 gezeigten Ausführungsform der Herstellungsvorrichtung 200 ist es vorgesehen, dass mittels des ersten Werkzeugelements 212a an einem Vorläufer der ersten Decklage 104 erste Öffnungen 154 ausgebildet werden, bevor die Fügeelemente 112 und/oder das Kernmaterial 110 an der ersten Decklage 104 angeordnet werden.

Die zweiten Öffnungen 156 werden bei der in Fig. 8 gezeigten Ausführungsform mittels des zweiten Werkzeugelements 212b an einem Vorläufer der zweite Decklage 106 ausgebildet, bevor diese zweite Decklage 106 mechanisch mit den Fügeelementen 112 und/oder mit dem Kernmaterial 110 verbunden wird.

Weiter ist es bei der in Fig. 8 gezeigten Ausführungsform der Herstellungsvorrichtung 200 vorgesehen, dass mittels der Kernmaterial-Anordnungseinrichtung 218 ein flüssiges Kernmaterial 110 und/oder ein flüssiges Vorläufermaterial des Kernmaterials 110 auf die erste Decklage 104 aufgebracht wird.

Beispielsweise wird das flüssige Kernmaterial 110 mittels der Kernmaterial-Anordnungseinrichtung 218 auf einen Bereich 228 der ersten Decklage 104 und/oder eines Vorläufers der ersten Decklage 104 aufgebracht, in welchem die erste Decklage 104 und/oder der Vorläufer der ersten Decklage 104 noch nicht mit der zweite Decklage 106 mechanisch verbunden ist.

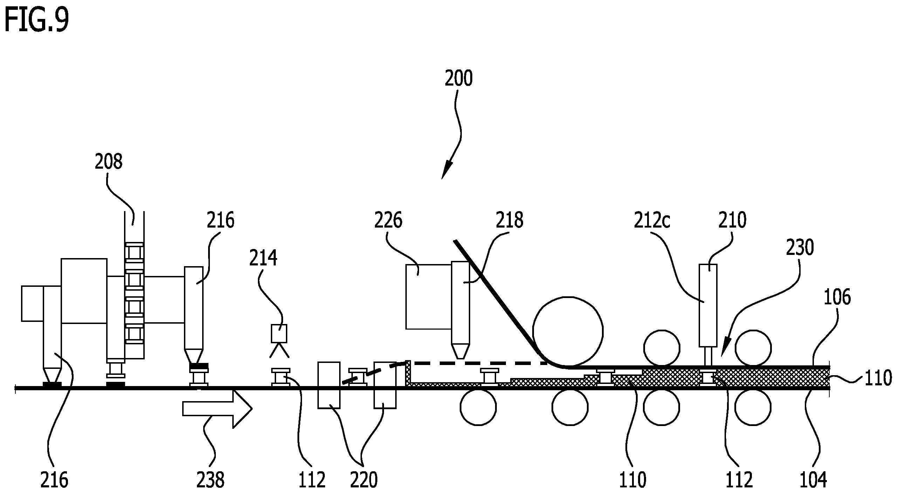

Eine in Fig. 9 dargestellte weitere Ausführungsform einer Herstellungsvorrichtung 200 unterscheidet sich von der in Fig. 8 dargestellten Ausführungsform dadurch, dass die Werkzeugeinrichtung 210 mindestens ein Werkzeugelement 212c zur Ausbildung der ersten Öffnungen 154 und/oder der zweiten Öffnungen 156 aufweist.

Mittels des Werkzeugelements 212c lassen sich erste Öffnungen 154 und/oder zweite Öffnungen 156 in einem Bereich 230 der ersten Decklage 104 und/oder der zweiten Decklage 106 ausbilden, in welchem die erste Decklage 104 bereits mittels der Fügeelemente 112 mit der zweite Decklage 106 verbunden ist.

Es kann vorgesehen sein, dass mittels der Werkzeugeinrichtung 210 und/oder mittels des Werkzeugelements 212c ein oder mehrere Befestigungselemente 150 an einem Fügeelement 112 ausbildbar sind oder ausgebildet werden. Beispielsweise kann es vorgesehen sein, dass mittels der Werkzeugeinrichtung 210 und/oder mittels des Werkzeugelements 212c mindestens ein Innengewinde 158 an dem Fügeelement 112 ausbildbar ist oder ausgebildet wird.

Im Übrigen stimmt die in Fig. 9 dargestellte Ausführungsform der Herstellungsvorrichtung 200 mit der in Fig. 8 dargestellten Ausführungsform überein, sodass auf deren vorstehende Beschreibung insoweit Bezug genommen wird.

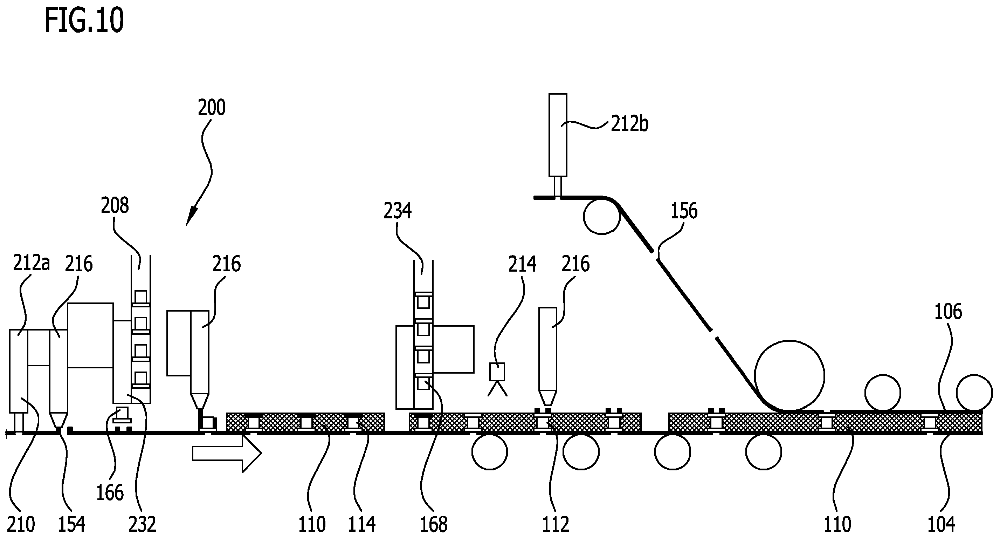

Eine in Fig. 10 dargestellte weitere Ausführungsform der Herstellungsvorrichtung 200 unterscheidet sich von der Ausführungsform gemäß Fig. 8 im Wesentlichen dadurch, dass zur Ausbildung des Kernmaterials 110 ein festes Kernmaterial bereitgestellt wird.

Bei der Ausführungsform gemäß Fig. 10 umfasst die Fügeelement-Anordnungseinrichtung 208 ein erstes Anordnungselement 232 für erste Teilkörper 166 von Fügeelementen 112 und ein zweites Anordnungselement 234 für zweite Teilkörper 168 von Fügeelementen 112.

Mittels des ersten Anordnungselements 232 lassen sich erste Teilkörper 166 an einem Vorläufer der ersten Decklage 104 anordnen und/oder mit dem Vorläufer der ersten Decklage 104 mechanisch verbinden.

Mittels des zweiten Anordnungselements 234 lassen sich zweite Teilkörper 168 mit den an der ersten Decklage 104 und/oder an dem Vorläufer der ersten Decklage 104 angeordneten ersten Teilkörper 166 verbinden, sodass ein Fügeelement 112 hergestellt und/oder ausgebildet wird.

Beispielsweise lassen sich die zweiten Teilkörper 168 mittels des zweiten Anordnungselements 234 in die ersten Teilkörper 166 einschrauben.

Im Übrigen stimmt die in Fig. 10 dargestellte Variante hinsichtlich Aufbau und Funktion mit der in Fig. 8 dargestellten Ausführungsform überein, sodass auf deren vorstehende Beschreibung insoweit Bezug genommen wird.

Die Herstellung des Sandwichbauteils 102 mittels der Herstellungsvorrichtung 200 funktioniert wie folgt:
Bei der in Fig. 8 dargestellten Variante des Verfahrens wird ein Vorläufer der ersten Decklage 104 mittels der ersten Bereitstellungseinrichtung 202 bereitgestellt und/oder gefördert.

Mittels des ersten Werkzeugelements 212a werden erste Öffnungen 154 an dem Vorläufer der ersten Decklage 104 ausgebildet.

Mittels der Fügestoff-Bereitstellungseinrichtung 216 wird Fügestoff, z.B. Klebstoff, an den jeweiligen ersten Öffnungen 154 und/oder um die jeweiligen ersten Öffnungen 154 angeordnet. Alternativ oder zusätzlich wird mittels der Fügestoff-Bereitstellungseinrichtung 216 Fügestoff an den ersten Flanschbereichen 116 der Fügeelemente 112 angeordnet.

Mittels der Fügeelement-Anordnungseinrichtung 208 werden an den ersten Öffnungen 154 jeweils Fügeelemente 112 derart angeordnet, dass das mindestens eine Befestigungselement 150 des Fügeelements 112 und/oder der Innenbereich 160 des Fügeelements 112 mittels der jeweiligen ersten Öffnung 154 zugänglich ist.

Beispielsweise wird ein jeweiliges Fügeelement 112 und/oder ein jeweiliges Befestigungselement 150 des Fügeelements 112 zentriert bezüglich einer jeweiligen ersten Öffnung 154 angeordnet.

Nach Anordnung der Fügeelemente 112 an dem Vorläufer der ersten Decklage 104 wird an den Fügeelementen 112, beispielsweise an den zweiten Flanschbereichen 118 der Fügeelemente 112, mittels der Fügestoff-Bereitstellungseinrichtung 216 Fügestoff aufgetragen.

Mittels der Sensoreinrichtung 214 wird eine Position von an dem Vorläufer der ersten Decklage 104 angeordneten Fügeelementen 112 und/oder ersten Öffnungen 154 erfasst und an die Steuerungseinrichtung 226 übermittelt.

Die Steuerungseinrichtung 226 wertet die übermittelten Positionen von der Sensoreinrichtung 214 aus und steuert das zweite Werkzeugelement 212b der Werkzeugeinrichtung 210 derart, dass an einem Vorläufer der zweiten Decklage 106 zweite Öffnungen 156 an einer definierten Position ausgebildet werden.

Die zweiten Öffnungen 156 werden derart angeordnet, dass mittels dieser zweiten Öffnungen 156 jeweils das mindestens eine Befestigungselement 150 und/oder der Innenbereich 160 eines Fügeelements 112 zugänglich ist, nachdem die zweite Decklage 106 an den Fügeelementen 112 angeordnet wurde und/oder mechanisch verbunden wurde.

Zur Herstellung einer mechanischen Verbindung zwischen der zweiten Decklage 106 und den Fügeelementen 112 wird die zweite Decklage 106 beispielsweise mittels der Förderelemente 206 an den Fügeelementen 206 angeordnet und/oder an die Fügeelemente 206 angepresst.

Die zweiten Öffnungen 156 werden beispielsweise so angeordnet, dass diese zentriert und/oder fluchtend bezüglich eines Fügeelements 112 und/oder mindestens eines Befestigungselements 150 ausgerichtet sind, nachdem die zweite Decklage an den Fügeelementen 112 angeordnet wurde und/oder mit den Fügeelementen 112 mechanisch verbunden wurde.

Mittels der Kernmaterial-Anordnungseinrichtung 218 wird ein flüssiges Vorläufermaterial des Kernmaterials 110 auf den Bereich 228 des Vorläufers ersten Decklage 104 aufgebracht, wobei der Vorläufer der ersten Decklage 104 in diesem Bereich 228 noch nicht mit der zweiten Decklage 106 mechanisch verbunden ist.

Beispielsweise wird mittels der Steuerungseinrichtung 226 eine Anordnungsgeschwindigkeit des flüssigen Vorläufermaterials des Kernmaterials 110 derart gesteuert und/oder geregelt, dass das flüssige Vorläufermaterial des Kernmaterials 110 einen Bereich 236 der zweiten Decklage 106 erst dann mechanisch kontaktiert, nachdem dieser Bereich 236 mittels der Fügeelemente 112 mit der ersten Decklage 104 mechanisch verbunden ist.

Zur Steuerung und/oder Regelung der Anordnungsgeschwindigkeit des flüssigen Vorläufermaterials des Kernmaterials 110 wird beispielsweise mittels der Steuerungseinrichtung 226 eine Austrittsgeschwindigkeit und/oder ein Austrittsvolumenstrom des flüssigen Vorläufermaterials des Kernmaterials 110 aus der Kernmaterial-Anordnungseinrichtung 218 gesteuert und/oder geregelt.

Alternativ oder zusätzlich werden ein Arbeitsvorschub 238 der ersten Decklage 104 und/oder eines Vorläufers der ersten Decklage 104 und/oder der zweiten Decklage 106 und/oder eines Vorläufers der zweiten Decklage 106 gesteuert und/oder geregelt.

Das flüssige Vorläufermaterial des Kernmaterials 110 härtet nach Anordnung auf die erste Decklage 104 aus und/oder verfestigt sich.

Insbesondere wird nach Anordnung des flüssigen Vorläufermaterials des Kernmaterials 110 eine mechanische Verbindung zwischen dem hieraus gebildeten festen Kernmaterial 110 und der ersten Decklage 104 und/oder der zweiten Decklage 106 hergestellt.

Es kann vorgesehen sein, dass mittels der Umformungseinrichtung 220 mittels Umformung und/oder Umfaltung der ersten Decklage 104 und/oder eines Vorläufers der ersten Decklage 104 das Stirnseitenelement 224 ausgebildet wird. Die Ausbildung des Stirnseitenelements 224 erfolgt insbesondere bevor das flüssige Vorläufermaterial des Kernmaterials 110 auf die erste Decklage 104 aufgetragen wird.

Bei in Fig. 9 gezeigten Variante des Verfahrens werden abweichend von der in Fig. 8 gezeigten Variante die ersten Öffnungen 154 und/oder die zweiten Öffnungen 156 ausgebildet, nachdem eine mechanische Verbindung zwischen der ersten Decklage 104 und der zweiten Decklage 106 mittels der Fügeelemente 112 hergestellt wurde und/oder nachdem das Kernmaterial 110 zwischen der ersten Decklage 104 und der zweiten Decklage 106 angeordnet wurde.

Hierzu wird mittels der Sensoreinrichtung 214 eine Position von an dem Vorläufer der ersten Decklage 104 angeordneten Fügeelementen 112 und/oder Befestigungselementen 150 erfasst, bevor die zweite Decklage 106 an den Fügeelementen angeordnet wurde.

Die ersten Öffnungen 154 und/oder die zweiten Öffnungen 156 werden in dem Bereich 230 der ersten Decklage 104 und/oder der zweiten Decklage 106 ausgebildet, in welchem die erste Decklage 104 und/oder die zweite Decklage 106 und/oder das Kernmaterial 110 und/oder die Fügeelemente 112 bereits mechanisch miteinander verbunden sind.

Mittels der Steuerungseinrichtung 226 wird das Werkzeugelement 212c derart gesteuert, dass in dem Bereich 230 erste Öffnungen 154 und/oder zweite Öffnungen 156 zentriert und/oder fluchtend bezüglich eines jeweiligen Fügeelements 112 und/oder eines jeweiligen Befestigungselements 150 ausgerichtet sind.

Alternativ oder zusätzlich kann vorgesehen sein, dass mittels des Werkzeugelements 212c in dem Bereich 230 ein oder mehrere Befestigungselemente 150 an einem jeweiligen Fügeelement 112 ausgebildet werden.

Insbesondere werden ein oder mehrere Befestigungselemente 150 an einem jeweiligen Fügeelement 112 ausgebildet, bevor oder nachdem die zugeordnete erste Öffnung 156 und/oder die zugeordnete zweite Öffnung 158 ausgebildet wurde.

Im Übrigen stimmt die in Fig. 9 gezeigte Variante des Verfahrens mit der in Fig. 8 gezeigten Variante überein.

Bei der in Fig. 10 gezeigten Variante des Verfahrens wird abweichend von der in Fig. 8 gezeigten Variante ein festes Kernmaterial 110 bereitgestellt.

Mittels des ersten Anordnungselements 208 werden, beispielsweise nach Ausbildung der ersten Öffnungen 154, erste Teilkörper 166 der Fügeelemente 112 an dem Vorläufer der ersten Decklage 104 angeordnet.

Die ersten Teilkörper 166 werden insbesondere fluchtend und/oder zentriert bezüglich einer jeweiligen ersten Öffnung 154 angeordnet.

Das feste Kernmaterial 110 wird an dem Vorläufer der ersten Decklage 104 und/oder an den ersten Teilkörpern 166 angeordnet, sodass die ersten Teilkörper 166 in den Ausnehmungen 114 des Kernmaterials 110 angeordnet sind.

Die zweiten Teilkörper 168 werden mittels des zweiten Anordnungselements 234 mit den ersten Teilkörpern 166 verbunden, sodass die Fügeelemente 112 ausgebildet werden.

Mittels der Fügestoff-Bereitstellungseinrichtung 216 wird Fügestoff an dem festen Kernmaterial 110 und/oder an den zweiten Teilkörpern 168 der Fügeelemente 112 und/oder an den zweiten Flanschbereichen 118 der Fügeelemente 112 angeordnet.

Anschließend wird die zweite Decklage 106 an dem festen Kernmaterial 110 und/oder an den zweiten Teilkörpern 168 und/oder an den zweiten Flanschbereichen 118 angeordnet.

Im Übrigen stimmt die in Fig. 10 gezeigte Variante des Verfahrens mit der in Fig. 8 gezeigten Variante überein.

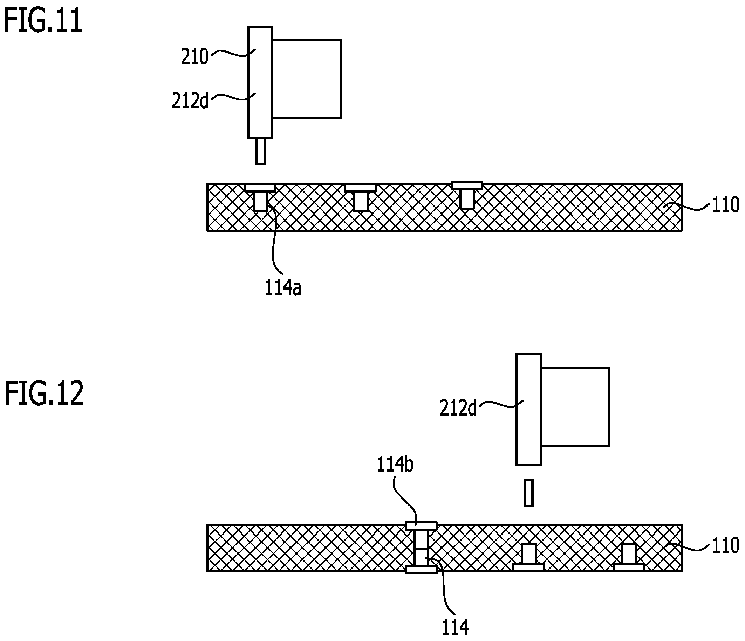

Bei der in den Fig. 11 bis 16 gezeigten Variante des Verfahrens wird abweichend von der in Fig. 10 gezeigten Variante zuerst das feste Kernmaterial 110 mit den Fügeelementen 112 bereitgestellt und/oder ausgebildet. Anschließend wird eine mechanische Verbindung zwischen dem festen Kernmaterial 110, umfassend die Fügeelemente 112, und der ersten Decklage 104 und/oder der zweiten Decklage 106 hergestellt.

Zur Anordnung und/oder Einbringung der Fügeelemente 112 in das feste Kernmaterial 110 werden mittels eines Werkzeugelements 212d der Werkzeugeinrichtung 210 die Ausnehmungen 114 an dem festen Kernmaterial 110 ausgebildet (Fig. 11 und 12). Die Ausnehmungen 114 weisen eine zu den Fügeelementen 112 und/oder zu den ersten Teilkörpern 166 der Fügeelemente 112 und/oder zu den zweiten Teilkörpern 168 der Fügeelemente 112 korrespondierende Form auf.

Beispielsweise wird zuerst jeweils ein erstes Teilelement 114a der Ausnehmung 114 zur Aufnahme des ersten Teilkörpers 166 ausgebildet (Fig. 11). Anschließend wird ein jeweils zweites Teilelement 114b der Ausnehmung 114 zur Aufnahme des zweiten Teilkörpers 168 ausgebildet (Fig. 12).

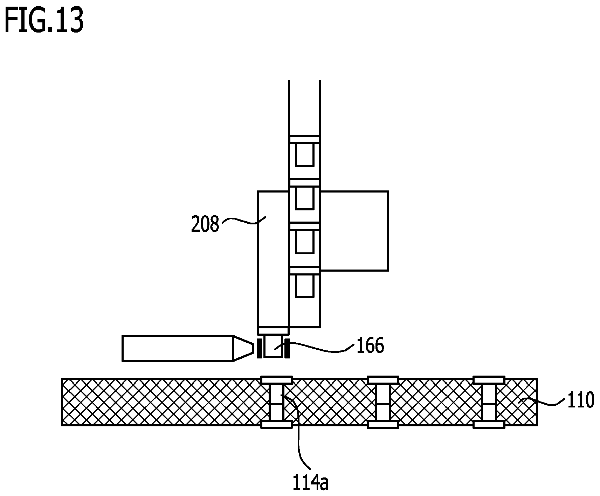

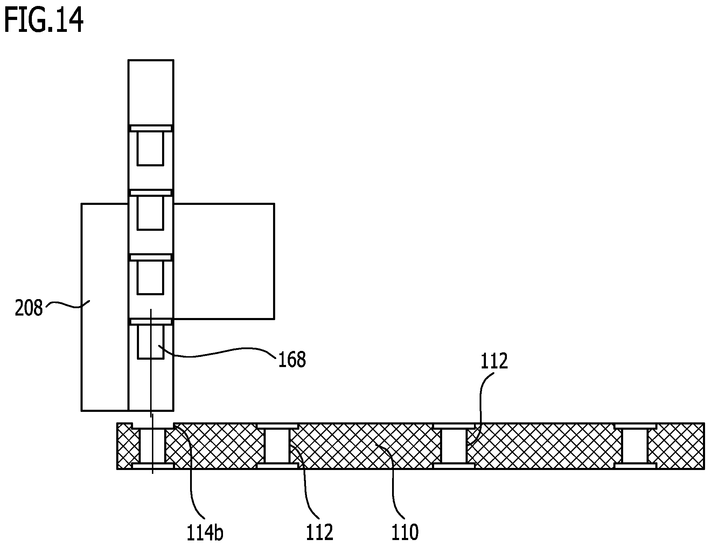

Zur Ausbildung der Fügeelemente 112 werden die ersten Teilkörper 166 in den ersten Teilelementen 114a angeordnet (Fig. 13) und die zweiten Teilkörper 168 werden in den zweiten Teilelementen 114b angeordnet und/oder die zweiten Teilkörper 168 werden mit den ersten Teilkörpern 166 verbunden (Fig. 14).

Insbesondere weisen an dem festen Kernmaterial 110 angeordnete Fügeelemente 112 bereits jeweils ein oder mehrere Befestigungselemente 150 auf oder bei an dem festen Kernmaterial 110 angeordneten Fügeelementen 112 werden jeweils ein oder mehrere Befestigungselemente 150 ausgebildet.

An der ersten Decklage 104 und/oder an der zweiten Decklage 106 wird Fügestoff zur Herstellung einer mechanischen Verbindung mit dem Kernmaterial 110 und/oder den Fügeelementen 112 angeordnet. Beispielsweise wird an der ersten Decklage 104 und/oder an der zweiten Decklage 106 Heißklebstoff angeordnet.

Beispielsweise ist an der ersten Öffnung 162 des Fügeelements 112 und/oder an der zweiten Öffnung 164 des Fügeelements 112 eine Abdeckfolie angeordnet.

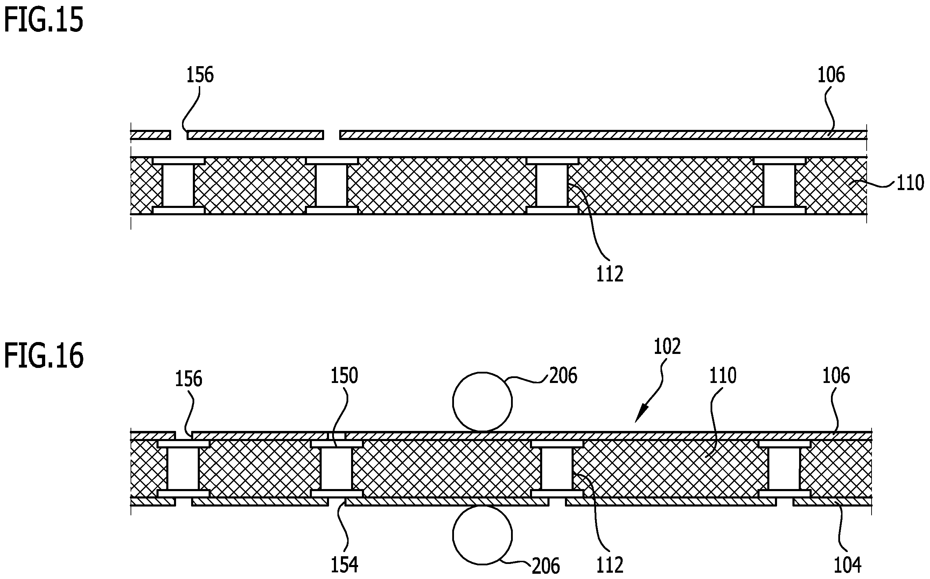

An der ersten Decklage 104 und/oder an der zweiten Decklage 106 werden die ersten Öffnungen 154 und/oder die zweiten Öffnungen 156 ausgebildet (Fig. 15 und 16). Insbesondere erfolgt die Ausbildung der ersten Öffnungen 154 vor oder nach einer Herstellung einer mechanischen Verbindung zwischen der ersten Decklage 104 und dem Kernmaterial 110 und/oder zwischen der ersten Decklage 104 und den Fügeelementen 112. Insbesondere erfolgt die Ausbildung der zweiten Öffnungen 156 vor oder nach einer Herstellung einer mechanischen Verbindung zwischen der zweiten Decklage 106 und dem Kernmaterial 110 und/oder zwischen der zweiten Decklage 106 und den Fügeelementen 112.

Zwischen der ersten Decklage 104, der zweiten Decklange 106 und dem Kernmaterial 110 wird zur Herstellung des Sandwichbauteils 102 (Fig. 16) jeweils eine mechanische Verbindung hergestellt (angedeutet in Fig. 15).

### Bezugszeichenliste

- 100: Fahrzeug
- 102: Sandwichbauteil
- 104: erste Decklage
- 106: zweite Decklage
- 108: Zwischenraum
- 110: Kernmaterial
- 112: Fügeelement
- 112a: Fügeelement
- 114: Ausnehmung
- 114a: erstes Teilelement
- 114b: zweites Teilelement
- 116: erster Flanschbereich
- 118: zweiter Flanschbereich
- 120: erste Innenseite
- 122: zweite Innenseite
- 124: Höhenrichtung
- 126: erste Außenseite
- 128: zweite Außenseite
- 130: Unterseite
- 132: Oberseite
- 134: Fahrwerk
- 134a: vordere Fahrzeugachse
- 134b: hintere Fahrzeugachse
- 136: Fahrerkabine
- 138: Ladefläche
- 139: Laderaumkabine
- 140: Längenrichtung
- 142: vorderer Teilbereich
- 144: hinterer Teilbereich
- 146: Verjüngung
- 148: Breitenrichtung
- 150: Befestigungselement
- 152: Bauelement
- 154: erste Öffnung
- 156: zweite Öffnung
- 158: Innengewinde
- 160: Innenbereich
- 162: erste Öffnung
- 164: zweite Öffnung
- 166: erster Teilkörper
- 168: zweiter Teilkörper
- 170: Innengewinde
- 172: Außengewinde
- 174: Ausnehmung
- 176: Eckbereich
- 178: Kantenbereich
- 180: erster / vorderer Endbereich
- 182: zweiter / hinterer Endbereich
- 184: Aufnahmeelement
- 184a: Aufnahmeelement
- 186: Bauteil
- 188: Ausnehmung
- 190: Flanschbereich
- 192: Kombinationselement
- 194: Strukturmaterial
- 196: Ausnehmung
- 198: Höhe
- 200: Herstellungsvorrichtung
- 202: erste Bereitstellungseinrichtung
- 204: zweite Bereitstellungseinrichtung
- 206: Förderelement
- 208: Fügeelement-Anordnungseinrichtung
- 210: Werkzeugeinrichtung
- 212: Werkzeugelement
- 212a: erstes Werkzeugelement
- 212b: zweites Werkzeugelement
- 212c: Werkzeugelement
- 212d: Werkzeugelement
- 214: Sensoreinrichtung
- 216: Fügestoff-Bereitstellungseinrichtung
- 218: Kernmaterial-Anordnungseinrichtung
- 220: Umformungseinrichtung
- 222: Rollenelement
- 224: Stirnseitenelement
- 226: Steuerungseinrichtung
- 228: Bereich
- 230: Bereich
- 232: erstes Anordnungselement
- 234: zweites Anordnungselement
- 236: Bereich
- 238: Arbeitsvorschub

## Patentansprüche

1. Sandwichbauteil (102) für ein Fahrzeug (100), insbesondere Landfahrzeug und/oder Kraftfahrzeug, umfassend
eine erste Decklage (104),
eine zu der ersten Decklage (104) beabstandete zweite Decklage (106), ein zwischen der ersten Decklage (104) und der zweiten Decklage (106) angeordnetes Kernmaterial (110)
und eine Mehrzahl von Fügeelementen (112) zur Herstellung einer mechanischen Verbindung zwischen der ersten Decklage (104) und der zweiten Decklage (106), wobei
a) die Fügeelemente (112) zumindest abschnittsweise zwischen der ersten Decklage (104) und der zweiten Decklage (106) angeordnet sind und/oder die Fügeelemente (112) zumindest abschnittsweise durch das Kernmaterial (110) durchgeführt sind; und
b) mindestens ein Fügeelement (112) mindestens ein Befestigungselement (150) aufweist, mittels welchem eine mechanische Verbindung zwischen einem Bauelement (152) und dem Sandwichbauteil (102) herstellbar ist oder hergestellt ist; und
c) die Fügeelemente (112) jeweils einen ersten Teilkörper (166) und einen zweiten Teilkörper (168) aufweisen, wobei der zweite Teilkörper (168) mit dem ersten Teilkörper (166) verbindbar ist oder verbunden ist, wobei der erste Teilkörper (166) ein Innengewinde (170) aufweist und wobei der zweite Teilkörper (168) ein Außengewinde (172) aufweist.

2. Sandwichbauteil (102) nach Anspruch 1, **dadurch gekennzeichnet, dass** das Sandwichbauteil (102) ein tragendes Strukturbauteil, insbesondere eine Trageplatte und/oder ein Trageelement, ist, welches
a) zur Aufnahme einer Fahrerkabine (136) des Fahrzeugs (100) dient; und/oder
b) zur Aufnahme und/oder Ausbildung eines Ladebereichs und/oder einer Ladefläche (138) des Fahrzeugs (100) dient.

3. Sandwichbauteil (102) nach Anspruch 1 oder 2, **dadurch gekennzeichnet, dass** das Außengewinde (172) des zweiten Teilkörpers (168) in das Innengewinde (170) des ersten Teilkörpers (166) einschraubbar ist oder eingeschraubt ist.

4. Sandwichbauteil (102) nach einem der Ansprüche 1 bis 3, **gekennzeichnet durch** eine Mehrzahl von Ausnehmungen (174), welche in mindestens einem Eckbereich (176) und/oder Kantenbereich (178) des Sandwichbauteils (102) angeordnet und/oder ausgebildet sind, und insbesondere **dadurch gekennzeichnet, dass** die Ausnehmungen (174) bezüglich einer Höhenrichtung (124) des Sandwichbauteils (102) durchgängig durch das Sandwichbauteil (102) verlaufen.

5. Sandwichbauteil (102) nach einem der Ansprüche 1 bis 4, **dadurch gekennzeichnet, dass** mindestens ein Fügeelement (112) als Kombinationselement (192) ausgebildet ist, wobei das Kombinationselement (192) ein Strukturmaterial (194) aufweist und mindestens ein Befestigungselement (150), welches an dem Strukturmaterial (194) angeordnet und/oder ausgebildet ist, und insbesondere **dadurch gekennzeichnet, dass** das Kombinationselement (192) und/oder das Strukturmaterial (194) des Kombinationselements (192) mit dem Kernmaterial (110) stoffschlüssig verbunden ist.

6. Sandwichbauteil (102) nach einem der Ansprüche 1 bis 5, **gekennzeichnet durch** ein Aufnahmeelement (184; 184a) zur Anordnung und/oder zur Aufnahme eines Bauteils (186) an dem Sandwichbauteil (102), wobei das Aufnahmeelement (184; 184a) zumindest abschnittsweise innerhalb eines zwischen der ersten Decklage (104) und der zweiten Decklage (106) gebildeten Zwischenraums (108) angeordnet ist und/oder wobei das Aufnahmeelement (184; 184a) lösbar mit mindestens einem Befestigungselement (150) des Sandwichbauteils (102) verbindbar ist oder verbunden ist, und insbesondere **dadurch gekennzeichnet, dass** das Aufnahmeelement (184; 184a) als Batteriegehäuse und/oder zur Aufnahme einer Batterie eingerichtet und ausgebildet ist.

7. Fahrzeug (100), insbesondere Landfahrzeug und/oder Kraftfahrzeug, umfassend ein Sandwichbauteil (102) gemäß einem der Ansprüche 1 bis 6.

8. Fahrzeug (100) nach Anspruch 7, **gekennzeichnet durch** mindestens eines der Folgenden:
a) das Fahrzeug (100) weist ein Fahrwerk (134) und/oder eine vordere Fahrzeugachse (134a) und/oder eine hintere Fahrzeugachse (134b) auf, wobei das Fahrwerk (134) und/oder die vordere Fahrzeugachse (134a) und/oder die hintere Fahrzeugachse (134b) mittels mindestens eines Befestigungselements (150) des Sandwichbauteils (102) mit dem Sandwichbauteil (102) mechanisch verbunden sind; und/oder
b) das Fahrzeug (100) weist eine Fahrerkabine (136) auf, welche mittels mindestens eines Befestigungselements (150) des Sandwichbauteils (102) mit dem Sandwichbauteil (102) mechanisch verbunden ist; und/oder
c) das Fahrzeug (100) weist eine an dem Sandwichbauteil (102) angeordnete und/oder aus dem Sandwichbauteil (102) gebildete Ladefläche (138) auf, welche insbesondere glatt und/oder eben ausgebildet ist; und/oder
d) das Fahrzeug (100) weist eine mit dem Sandwichbauteil (102) mechanisch verbundene Laderaumkabine (139) auf, wobei eine an dem Sandwichbauteil (102) angeordnete und/oder aus dem Sandwichbauteil (102) gebildete Ladefläche (138) des Fahrzeugs (100) innerhalb der Laderaumkabine (139) angeordnet ist.

9. Verfahren zur Herstellung eines Sandwichbauteils (102) nach einem der Ansprüche 1 bis 6, umfassend
eine erste Decklage (104),
eine zu der ersten Decklage (104) beabstandete zweite Decklage (106), ein zwischen der ersten Decklage (104) und der zweiten Decklage (106) angeordnetes Kernmaterial (110) und
eine Mehrzahl von Fügeelementen (112), wobei
a) mittels der Fügeelemente (112) eine mechanische Verbindung zwischen der ersten Decklage (104) und der zweiten Decklage (106) hergestellt wird;
b) sich die Fügeelemente (112) zumindest abschnittsweise zwischen der ersten Decklage (104) und der zweiten Decklage (106) erstrecken und/oder die Fügeelemente (112) zumindest abschnittsweise durch das Kernmaterial (110) durchgeführt werden;
c) mindestens ein Fügeelement (112) mindestens ein Befestigungselement (150) aufweist und/oder an mindestens einem Fügeelement (112) mindestens ein Befestigungselement (150) ausgebildet wird; und
d) mittels des mindestens einen Befestigungselements (150) eine mechanische Verbindung zwischen einem Bauelement (152) und dem Sandwichbauteil (102) herstellbar ist oder hergestellt ist.

10. Verfahren nach Anspruch 9, wobei
eine mechanische Verbindung der Fügeelemente (112) mit der ersten Decklage (104) hergestellt wird, eine mechanische Verbindung der zweiten Decklage (106) mit den Fügeelementen (112) hergestellt wird, welche mit der ersten Decklage (104) mechanisch verbunden sind, und
a) mindestens eine erste Öffnung (154) an der ersten Decklage (104) derart ausgebildet wird, dass mittels der mindestens einen ersten Öffnung (154) mindestens ein der mindestens einen ersten Öffnung (154) zugeordnetes Befestigungselement (150) eines Fügeelement (112) zugänglich ist, wobei die Ausbildung der mindestens einen ersten Öffnung (154) vor oder nach der Herstellung der mechanischen Verbindung zwischen den Fügeelementen (112) und der ersten Decklage (104) erfolgt; und/oder
b) mindestens eine zweite Öffnung (156) an der zweiten Decklage (106) derart ausgebildet wird, dass mittels der mindestens einen zweiten Öffnung (156) mindestens ein der mindestens einen zweiten Öffnung (156) zugeordnetes Befestigungselement (150) eines Fügeelement (112) zugänglich ist, wobei die Ausbildung der mindestens einen zweiten Öffnung (156) vor oder nach der Herstellung der mechanischen Verbindung zwischen den Fügeelementen (112) und der zweiten Decklage (106) erfolgt.

11. Verfahren nach Anspruch 10, **gekennzeichnet durch** mindestens eines der Folgenden:
a) die Ausbildung der mindestens einen ersten Öffnung (154) und/oder der mindestens einen zweiten Öffnung (156) erfolgt nach der Herstellung der mechanischen Verbindung der Fügeelemente (112) mit der ersten Decklage (104) und/oder mit der zweiten Decklage (106); und/oder
b) vor der Ausbildung der mindestens einen ersten Öffnung (154) und/oder der mindestens einen zweiten Öffnung (156) und/oder vor einer Anordnung der zweiten Decklage (106) an den Fügeelementen (112) wird eine Position von an der ersten Decklage (104) angeordneten Fügeelementen (112) und/oder von jeweiligen Befestigungselementen (150) von an der ersten Decklage (104) angeordneten Fügeelementen (112) mittels einer Sensoreinrichtung (214) erfasst, wobei insbesondere mittels der erfassten Positionen eine Steuerung einer Werkzeugeinrichtung (210) zur Ausbildung der mindestens einen ersten Öffnung (154) und/oder der mindestens einen zweiten Öffnung (156) erfolgt.

12. Verfahren nach einem der Ansprüche 9 bis 11, **gekennzeichnet durch** mindestens eines der Folgenden:
a) das Kernmaterial (110) wird während oder nach einer Herstellung einer mechanischen Verbindung der Fügeelemente (112) mit der ersten Decklage (104) und der zweiten Decklage (106) zwischen der ersten Decklage (104) und der zweiten Decklage (106) angeordnet und/oder ausgebildet; und/oder
b) zur Anordnung und/oder Ausbildung des Kernmaterials (110) wird ein flüssiges Kernmaterial (110) auf die erste Decklage (104) aufgebracht und/oder aufgesprüht; und/oder
c) ein Aufbringen und/oder Aufsprühen eines flüssigen Kernmaterials (110) auf die erste Decklage (104) erfolgt derart, dass eine Kontaktierung der zweiten Decklage (106) mit dem Kernmaterial (110) in einem Bereich (236) der zweiten Decklage (106) erst erfolgt, nachdem dieser Bereich (236) der zweiten Decklage (106) mittels der Fügeelemente (112) mit der ersten Decklage (104) mechanisch verbunden ist.

13. Verfahren nach Anspruch 9, wobei
erste Teilkörper von Fügeelementen (112) bereitgestellt werden, ein festes Kernmaterial (110) bereitgestellt wird, wobei das feste Kernmaterial (110) zu den ersten Teilkörpern (166) korrespondierende Ausnehmungen (114) zur Aufnahme und/oder Anordnung der ersten Teilkörper (166) an dem festen Kernmaterial (110) aufweist, das feste Kernmaterial (110) und/oder die ersten Teilkörper (166) mit der ersten Decklage (104) mechanisch verbunden werden, wobei die ersten Teilkörper (166) der Fügeelemente (112) zumindest abschnittsweise innerhalb der Ausnehmungen (114) des festen Kernmaterials (110) angeordnet sind, zur Ausbildung der Fügeelemente (112) an den ersten Teilkörpern (166) jeweils zu den ersten Teilkörpern (166) korrespondierende zweite Teilkörper (168) der Fügeelemente (112) angeordnet werden und wobei die zweite Decklage (106) mit den Fügeelementen (112) und/oder mit den zweiten Teilkörpern (168) der Fügeelemente (112) und/oder mit dem festen Kernmaterial (110) mechanisch verbunden wird.

14. Herstellungsvorrichtung (200) zur Herstellung eines Sandwichbauteils (102) nach einem der Ansprüche 1 bis 6, umfassend
eine erste Bereitstellungseinrichtung (202) zur Bereitstellung und/oder Förderung einer ersten Decklage (104),
eine Fügeelement-Anordnungseinrichtung (208), wobei mittels der Fügeelement-Anordnungseinrichtung (208) Fügeelemente (112) an der ersten Decklage (104) anordenbar sind und/oder ausbildbar sind und/oder mit der ersten Decklage (104) mechanisch verbindbar sind,
eine zweite Bereitstellungseinrichtung (204) zur Bereitstellung und/oder Förderung einer zweiten Decklage (106), wobei
a) die zweite Decklage (106) mittels der zweiten Bereitstellungseinrichtung (204) mit an der ersten Decklage (104) angeordneten Fügeelementen (112) mechanisch verbindbar ist; und/oder
b) die zweite Decklage (106) mittels der zweiten Bereitstellungseinrichtung (204) mit einem an der ersten Decklage (104) angeordneten Kernmaterial (110) mechanisch verbindbar ist;
und eine Werkzeugeinrichtung (210), insbesondere Bohreinrichtung und/oder Stanzeinrichtung, zur Ausbildung von ersten Öffnungen (154) an der ersten Decklage (104) und/oder von zweiten Öffnungen (156) an der zweiten Decklage (106) und/oder zur Ausbildung eines Befestigungselements (150) an mindestens einem Fügeelement (112).

15. Herstellungsvorrichtung (200) nach Anspruch 14, **gekennzeichnet durch** mindestens eines der Folgenden:
a) eine Sensoreinrichtung (214) zur Erfassung einer Position von an der ersten Decklage (104) angeordneten Fügeelementen (112) und/oder von ersten Teilkörpern (166) von an der ersten Decklage (104) angeordneten Fügeelementen (112) und/oder von zweiten Teilkörpern (168) von an der ersten Decklage (104) angeordneten Fügeelementen (112) und/oder von Befestigungselementen von an der ersten Decklage (104) angeordneten Fügeelementen (112); und/oder
b) eine Fügestoff-Bereitstellungseinrichtung (216) zur Anordnung eines Fügestoffs, insbesondere eines Klebstoffs, an der ersten Decklage (104) und/oder an der zweiten Decklage (106) und/oder an den Fügeelementen (112) und/oder an einem festen Kernmaterial (110); und/oder
c) eine Umformungseinrichtung (220) zur Ausbildung von mindestens einem Stirnseitenelement (224) an dem Sandwichbauteil (102) mittels Umformung und/oder Umfaltung der ersten Decklage (104) und/oder der zweiten Decklage (106); und/oder
d) eine Kernmaterial-Anordnungseinrichtung (218) zur Anordnung und/oder Ausbildung eines festen und/oder flüssigen Kernmaterials (110) auf der ersten Decklage (104); und/oder
e) eine Steuerungseinrichtung (226), welche mit einer Sensoreinrichtung (214) der Herstellungsvorrichtung (200) und/oder mit der ersten Bereitstellungseinrichtung (202) und/oder mit der zweiten Bereitstellungseinrichtung (204) und/oder mit der Fügeelement-Anordnungseinrichtung (208) und/oder mit der Werkzeugeinrichtung (210) und/oder mit einer Kernmaterial-Anordnungseinrichtung (218) der Herstellungsvorrichtung (200) und/oder mit einer Fügestoff-Bereitstellungseinrichtung (216) der Herstellungsvorrichtung (200) und/oder mit einer Umformungseinrichtung (220) der Herstellungsvorrichtung (200) signalwirksam verbunden ist.

## Claims

1. Sandwich component (102) for a vehicle (100), in particular a land vehicle and/or a motor vehicle, comprising
a first cover layer (104),
a second cover layer (106) which is spaced apart from the first cover layer (104),
a core material (110) which is arranged between the first cover layer (104) and the second cover layer (106),
and a plurality of joining elements (112) for producing a mechanical connection between the first cover layer (104) and the second cover layer (106), wherein
a) the joining elements (112) are arranged at least sectionally between the first cover layer (104) and the second cover layer (106), and/or the joining elements (112) are passed at least sectionally through the core material (110); and
b) at least one joining element (112) has at least one fastening element (150) by means of which a mechanical connection between a structural element (152) and the sandwich component (102) is producible or produced; and
c) the joining elements (112) each have a first sub-body (166) and a second sub-body (168), wherein the second sub-body (168) is connectable or connected to the first sub-body (166), wherein the first sub-body (166) has an internal thread (170), and wherein the second sub-body (168) has an external thread (172).

2. Sandwich component (102) according to Claim 1, **characterized in that** the sandwich component (102) is a supporting structural component, in particular a supporting plate and/or a supporting element, which
a) serves to receive a driver's cab (136) of the vehicle (100); and/or
b) serves to receive and/or form a loading region and/or a loading surface (138) of the vehicle (100).

3. Sandwich component (102) according to Claim 1 or 2, **characterized in that** the external thread (172) of the second sub-body (168) is screwable or screwed into the internal thread (170) of the first sub-body (166).

4. Sandwich component (102) according to one of Claims 1 to 3, **characterized by** a plurality of clearances (174) which are arranged and/or formed in at least one corner region (176) and/or edge region (178) of the sandwich component (102), and in particular **characterized in that** the clearances (174) extend continuously through the sandwich component (102) in relation to a vertical direction (124) of the sandwich component (102).

5. Sandwich component (102) according to one of Claims 1 to 4, **characterized in that** at least one joining element (112) is designed as a combination element (192), wherein the combination element (192) has a structural material (194) and at least one fastening element (150) that is arranged and/or formed in the structural material (194), and in particular **characterized in that** the combination element (192) and/or the structural material (194) of the combination element (192) are/is connected in a materially bonded manner to the core material (110).

6. Sandwich component (102) according to one of Claims 1 to 5, **characterized by** a receiving element (184; 184a) for arrangement of and/or for receiving a component (186) at the sandwich component (102), wherein the receiving element (184; 184a) is arranged at least sectionally within an intermediate space (108) formed between the first cover layer (104) and the second cover layer (106), and/or wherein the receiving element (184; 184a) is releasably connectable or connected to at least one fastening element (150) of the sandwich component (102), and in particular **characterized in that** the receiving element (184; 184a) is configured and designed as a battery housing and/or for receiving a battery.

7. Vehicle (100), in particular a land vehicle and/or a motor vehicle, comprising a sandwich component (102) according to one of Claims 1 to 6.

8. Vehicle (100) according to Claim 7, **characterized by** at least one of the following:
a) the vehicle (100) has running gear (134) and/or a front vehicle axle (134a) and/or a rear vehicle axle (134b), wherein the running gear (134) and/or the front vehicle axle (134a) and/or the rear vehicle axle (134b) are/is connected mechanically to the sandwich component (102) by means of at least one fastening element (150) of the sandwich component (102); and/or
b) the vehicle (100) has a driver's cab (136) which is connected mechanically to the sandwich component (102) by means of at least one fastening element (150) of the sandwich component (102); and/or
c) the vehicle (100) has a loading surface (138) which is arranged on the sandwich component (102) and/or formed from the sandwich component (102) and which, in particular, is of smooth and/or level form; and/or
d) the vehicle (100) has a loading-space cabin (139) which is connected mechanically to the sandwich component (102), wherein a loading surface (138), arranged on the sandwich component (102) and/or formed from the sandwich component (102), of the vehicle (100) is arranged within the loading-space cabin (139).

9. Method for producing a sandwich component (102) according to one of Claims 1 to 6 comprising
a first cover layer (104),
a second cover layer (106) which is spaced apart from the first cover layer (104),
a core material (110) which is arranged between the first cover layer (104) and the second cover layer (106), and
a plurality of joining elements (112), wherein
a) a mechanical connection between the first cover layer (104) and the second cover layer (106) is produced by means of the joining elements (112);
b) the joining elements (112) extend at least sectionally between the first cover layer (104) and the second cover layer (106), and/or the joining elements (112) are passed at least sectionally through the core material (110);
c) at least one joining element (112) has at least one fastening element (150), and/or at least one fastening element (150) is formed on at least one joining element (112); and
d) a mechanical connection between a structural element (152) and the sandwich component (102) is producible or produced by means of the at least one fastening element (150).

10. Method according to Claim 9, wherein
a mechanical connection of the joining elements (112) to the first cover layer (104) is produced, a mechanical connection of the second cover layer (106) to the joining elements (112) connected mechanically to the first cover layer (104) is produced, and
a) at least one first opening (154) is formed in the first cover layer (104) in such a way that, by means of the at least one first opening (154), at least one fastening element (150), assigned to the at least one first opening (154), of a joining element (112) is accessible, wherein the formation of the at least one first opening (154) is carried out before or after the mechanical connection between the joining elements (112) and the first cover layer (104) is produced; and/or
b) at least one second opening (156) is formed in the second cover layer (106) in such a way that, by means of the at least one second opening (156), at least one fastening element (150), assigned to the at least one second opening (156), of a joining element (112) is accessible, wherein the formation of the at least one second opening (156) is carried out before or after the mechanical connection between the joining elements (112) and the second cover layer (106) is produced.

11. Method according to Claim 10, **characterized by** at least one of the following:
a) the formation of the at least one first opening (154) and/or of the at least one second opening (156) is carried out after the mechanical connection of the joining elements (112) to the first cover layer (104) and/or to the second cover layer (106) is produced; and/or
b) before the formation of the at least one first opening (154) and/or of the at least one second opening (156) and/or before an arrangement of the second cover layer (106) on the joining elements (112), a position of joining elements (112) arranged on the first cover layer (104) and/or of respective fastening elements (150) of joining elements (112) arranged on the first cover layer (104) is detected by means of a sensor device (214), wherein, in particular by means of the detected positions, a tool device (210) for forming the at least one first opening (154) and/or the at least one second opening (156) is subjected to control.

12. Method according to one of Claims 9 to 11, **characterized by** at least one of the following:
a) the core material (110) is arranged and/or formed between the first cover layer (104) and the second cover layer (106) while a mechanical connection of the joining elements (112) to the first cover layer (104) and the second cover layer (106) is being produced or after this is produced; and/or,
b) for the purpose of arranging and/or forming the core material (110), a liquid core material (110) is applied to the first cover layer (104) and/or sprayed onto the latter; and/or
c) a liquid core material (110) is applied to and/or sprayed onto the first cover layer (104) in such a way that the second cover layer (106) first makes contact with the core material (110) in a region (236) of the second cover layer (106) after said region (236) of the second cover layer (106) is connected mechanically to the first cover layer (104) by means of the joining elements (112).

13. Method according to Claim 9, wherein
first sub-bodies of joining elements (112) are provided, a solid core material (110) is provided, wherein the solid core material (110) has clearances (114) corresponding to the first sub-bodies (166) that serve for receiving and/or arrangement of the first sub-bodies (166) in the solid core material (110), the solid core material (110) and/or the first sub-bodies (166) are connected mechanically to the first cover layer (104), wherein the first sub-bodies (166) of the joining elements (112) are arranged at least sectionally within the clearances (114) of the solid core material (110), on the first sub-bodies (166) are arranged in each case second sub-bodies (168), corresponding to the first sub-bodies (166), of the joining elements (112) for the purpose of forming the joining elements (112), and wherein the second cover layer (106) is connected mechanically to the joining elements (112) and/or to the second sub-bodies (168) of the joining elements (112) and/or to the solid core material (110).

14. Production apparatus (200) for producing a sandwich component (102) according to one of Claims 1 to 6, comprising
a first provision device (202) for providing and/or conveying a first cover layer (104),
a joining-element-arrangement device (208), wherein, by means of the joining-element-arrangement device (208), joining elements (112) are arrangeable and/or formable on the first cover layer (104) and/or are mechanically connectable to the first cover layer (104),
a second provision device (204) for providing and/or conveying a second cover layer (106), wherein
a) the second cover layer (106) is mechanically connectable by means of the second provision device (204) to joining elements (112) arranged on the first cover layer (104); and/or
b) the second cover layer (106) is mechanically connectable by means of the second provision device (204) to a core material (110) arranged on the first cover layer (104);
and a tool device (210), in particular a drilling device and/or a punching device, for forming first openings (154) in the first cover layer (104) and/or second openings (156) in the second cover layer (106) and/or for forming a fastening element (150) on at least one joining element (112).

15. Production apparatus (200) according to Claim 14, **characterized by** at least one of the following:
a) a sensor device (214) for detecting a position of joining elements (112) arranged on the first cover layer (104) and/or of first sub-bodies (166) of joining elements (112) arranged on the first cover layer (104) and/or of second sub-bodies (168) of joining elements (112) arranged on the first cover layer (104) and/or of fastening elements of joining elements (112) arranged on the first cover layer (104); and/or
b) a joining-material-provision device (216) for arrangement of a joining material, in particular an adhesive, on the first cover layer (104) and/or on the second cover layer (106) and/or on the joining elements (112) and/or on a solid core material (110); and/or
c) a shaping device (220) for forming at least one end-face element (224) on the sandwich component (102) by means of shaping and/or folding of the first cover layer (104) and/or the second cover layer (106); and/or
d) a core-material-arrangement device (218) for arranging and/or forming a solid and/or liquid core material (110) on the first cover layer (104); and/or
e) a control device (226) which is connected signal-effectively to a sensor device (214) of the production apparatus (200) and/or to the first provision device (202) and/or to the second provision device (204) and/or to the joining-element-arrangement device (208) and/or to the tool device (210) and/or to a core-material-arrangement device (218) of the production apparatus (200) and/or to a joining-material-provision device (216) of the production apparatus (200) and/or to a shaping device (220) of the production apparatus (200).

## Revendications

1. Composant en sandwich (102) pour un véhicule (100), notamment un véhicule terrestre et/ou un véhicule automobile, comprenant
une première couche de recouvrement (104),
une deuxième couche de recouvrement (106) espacée de la première couche de recouvrement (104),
un matériau de noyau (110) agencé entre la première couche de recouvrement (104) et la deuxième couche de recouvrement (106)
et une pluralité d'éléments d'assemblage (112) pour établir une liaison mécanique entre la première couche de recouvrement (104) et la deuxième couche de recouvrement (106),
a) les éléments d'assemblage (112) étant agencés au moins par sections entre la première couche de recouvrement (104) et la deuxième couche de recouvrement (106) et/ou les éléments d'assemblage (112) traversant au moins par sections le matériau de noyau (110) ; et
b) au moins un élément d'assemblage (112) présentant au moins un élément de fixation (150) au moyen duquel une liaison mécanique entre un élément de construction (152) et le composant en sandwich (102) peut être établie ou est établie ; et
c) les éléments d'assemblage (112) présentant chacun un premier corps partiel (166) et un deuxième corps partiel (168), le deuxième corps partiel (168) pouvant être relié ou étant relié au premier corps partiel (166), le premier corps partiel (166) présentant un filetage intérieur (170) et le deuxième corps partiel (168) présentant un filetage extérieur (172).

2. Composant en sandwich (102) selon la revendication 1, **caractérisé en ce que** le composant en sandwich (102) est un composant structurel porteur, notamment une plaque porteuse et/ou un élément porteur, qui
a) sert à recevoir une cabine de conduite (136) du véhicule (100) ; et/ou
b) sert à recevoir et/ou à réaliser une zone de chargement et/ou une surface de chargement (138) du véhicule (100).

3. Composant en sandwich (102) selon la revendication 1 ou 2, **caractérisé en ce que** le filetage extérieur (172) du deuxième corps partiel (168) peut être vissé ou est vissé dans le filetage intérieur (170) du premier corps partiel (166).

4. Composant en sandwich (102) selon l'une quelconque des revendications 1 à 3, **caractérisé par** une pluralité d'évidements (174) qui sont agencés et/ou réalisés dans au moins une zone d'angle (176) et/ou une zone de bord (178) du composant en sandwich (102), et notamment **caractérisé en ce que** les évidements (174) s'étendent de manière continue à travers le composant en sandwich (102) par rapport à une direction de hauteur (124) du composant en sandwich (102).

5. Composant en sandwich (102) selon l'une quelconque des revendications 1 à 4, **caractérisé en ce qu'**au moins un élément d'assemblage (112) est réalisé sous forme d'élément combiné (192), l'élément combiné (192) présentant un matériau structurel (194) et au moins un élément de fixation (150) qui est agencé et/ou réalisé sur le matériau structurel (194), et caractérisé notamment **en ce que** l'élément combiné (192) et/ou le matériau structurel (194) de l'élément combiné (192) sont reliés par liaison de matière au matériau de noyau (110).

6. Composant en sandwich (102) selon l'une quelconque des revendications 1 à 5, **caractérisé par** un élément de réception (184 ; 184a) pour l'agencement et/ou la réception d'un composant (186) sur le composant en sandwich (102), l'élément de réception (184 ; 184a) étant agencé au moins par sections à l'intérieur d'un espace intermédiaire (108) formé entre la première couche de recouvrement (104) et la deuxième couche de recouvrement (106) et/ou l'élément de réception (184 ; 184a) pouvant être relié ou étant relié de manière amovible à au moins un élément de fixation (150) du composant en sandwich (102), et caractérisé notamment en ce que l'élément de réception (184 ; 184a) est adapté et réalisé sous forme de boîtier de batterie et/ou pour recevoir une batterie.

7. Véhicule (100), notamment véhicule terrestre et/ou véhicule automobile, comprenant un composant en sandwich (102) selon l'une quelconque des revendications 1 à 6.

8. Véhicule (100) selon la revendication 7, **caractérisé par** au moins l'un des points suivants :
a) le véhicule (100) présente un châssis (134) et/ou un essieu de véhicule avant (134a) et/ou un essieu de véhicule arrière (134b), le châssis (134) et/ou l'essieu de véhicule avant (134a) et/ou l'essieu de véhicule arrière (134b) étant reliés mécaniquement au composant en sandwich (102) au moyen d'au moins un élément de fixation (150) du composant en sandwich (102) ; et/ou
b) le véhicule (100) présente une cabine de conduite (136) qui est reliée mécaniquement au composant en sandwich (102) au moyen d'au moins un élément de fixation (150) du composant en sandwich (102) ; et/ou
c) le véhicule (100) présente une surface de chargement (138) agencée sur le composant en sandwich (102) et/ou réalisée à partir du composant en sandwich (102), laquelle est notamment réalisée sous forme lisse et/ou plane ; et/ou
d) le véhicule (100) présente une cabine de chargement (139) reliée mécaniquement au composant en sandwich (102), une surface de chargement (138) du véhicule (100), agencée sur le composant en sandwich (102) et/ou réalisée à partir du composant en sandwich (102), étant agencée à l'intérieur de la cabine de chargement (139).

9. Procédé de fabrication d'un composant en sandwich (102) selon l'une quelconque des revendications 1 à 6, comprenant
une première couche de recouvrement (104),
une deuxième couche de recouvrement (106) espacée de la première couche de recouvrement (104),
un matériau de noyau (110) agencé entre la première couche de recouvrement (104) et la deuxième couche de recouvrement (106) et
une pluralité d'éléments d'assemblage (112),
a) une liaison mécanique entre la première couche de recouvrement (104) et la deuxième couche de recouvrement (106) étant établie au moyen des éléments d'assemblage (112) ;
b) les éléments d'assemblage (112) s'étendant au moins par sections entre la première couche de recouvrement (104) et la deuxième couche de recouvrement (106) et/ou les éléments d'assemblage (112) traversant au moins par sections le matériau de noyau (110) ;
c) au moins un élément d'assemblage (112) présentant au moins un élément de fixation (150) et/ou au moins un élément de fixation (150) est réalisé sur au moins un élément d'assemblage (112) ; et
d) une liaison mécanique entre un élément de construction (152) et le composant en sandwich (102) pouvant être établie ou étant établie au moyen de l'au moins un élément de fixation (150).

10. Procédé selon la revendication 9, dans lequel
une liaison mécanique des éléments d'assemblage (112) avec la première couche de recouvrement (104) est établie, une liaison mécanique de la deuxième couche de recouvrement (106) avec les éléments d'assemblage (112) est établie, qui sont reliés mécaniquement à la première couche de recouvrement (104), et
a) au moins une première ouverture (154) est réalisée sur la première couche de recouvrement (104) de telle sorte qu'au moins un élément de fixation (150) d'un élément d'assemblage (112) associé à l'au moins une première ouverture (154) soit accessible au moyen de l'au moins une première ouverture (154), la réalisation de l'au moins une première ouverture (154) étant effectuée avant ou après l'établissement de la liaison mécanique entre les éléments d'assemblage (112) et la première couche de recouvrement (104) ; et/ou
b) au moins une deuxième ouverture (156) est réalisée sur la deuxième couche de recouvrement (106) de telle sorte qu'au moins un élément de fixation (150) d'un élément d'assemblage (112) associé à l'au moins une deuxième ouverture (156) soit accessible au moyen de l'au moins une deuxième ouverture (156), la réalisation de l'au moins une deuxième ouverture (156) étant effectuée avant ou après l'établissement de la liaison mécanique entre les éléments d'assemblage (112) et la deuxième couche de recouvrement (106).

11. Procédé selon la revendication 10, **caractérisé par** au moins l'un des points suivants :
a) la réalisation de l'au moins une première ouverture (154) et/ou de l'au moins une deuxième ouverture (156) est effectuée après l'établissement de la liaison mécanique des éléments d'assemblage (112) avec la première couche de recouvrement (104) et/ou avec la deuxième couche de recouvrement (106) ; et/ou
b) avant la réalisation de l'au moins une première ouverture (154) et/ou de l'au moins une deuxième ouverture (156) et/ou avant un agencement de la deuxième couche de recouvrement (106) sur les éléments d'assemblage (112), une position des éléments d'assemblage (112) agencés sur la première couche de recouvrement (104) et/ou des éléments de fixation respectifs (150) des éléments d'assemblage (112) agencés sur la première couche de recouvrement (104) est détectée au moyen d'un appareil capteur (214), une commande d'un appareil d'outil (210) pour la réalisation de l'au moins une première ouverture (154) et/ou de l'au moins une deuxième ouverture (156) étant effectuée notamment au moyen des positions détectées.

12. Procédé selon l'une quelconque des revendications 9 à 11, **caractérisé par** au moins l'un des points suivants :
a) le matériau de noyau (110) est agencé et/ou réalisé entre la première couche de recouvrement (104) et la deuxième couche de recouvrement (106) pendant ou après un établissement d'une liaison mécanique des éléments d'assemblage (112) avec la première couche de recouvrement (104) et la deuxième couche de recouvrement (106) ; et/ou
b) pour agencer et/ou réaliser le matériau de noyau (110), un matériau de noyau liquide (110) est appliqué et/ou pulvérisé sur la première couche de recouvrement (104) ; et/ou
c) une application et/ou une pulvérisation d'un matériau de noyau liquide (110) sur la première couche de recouvrement (104) est effectuée de telle sorte qu'un contact de la deuxième couche de recouvrement (106) avec le matériau de noyau (110) dans une zone (236) de la deuxième couche de recouvrement (106) n'ait lieu qu'une fois que cette zone (236) de la deuxième couche de recouvrement (106) a été reliée mécaniquement à la première couche de recouvrement (104) au moyen des éléments d'assemblage (112).

13. Procédé selon la revendication 9, dans lequel
des premiers corps partiels d'éléments d'assemblage (112) sont fournis, un matériau de noyau solide (110) est fourni, le matériau de noyau solide (110) présentant des évidements (114) correspondant aux premiers corps partiels (166) pour recevoir et/ou agencer les premiers corps partiels (166) sur le matériau de noyau solide (110), le matériau de noyau solide (110) et/ou les premiers corps partiels (166) étant reliés mécaniquement à la première couche de recouvrement (104), les premiers corps partiels (166) des éléments d'assemblage (112) étant agencés au moins par sections à l'intérieur des évidements (114) du matériau de noyau solide (110), pour réaliser les éléments d'assemblage (112) sur les premiers corps partiels (166), des deuxièmes corps partiels (168) des éléments d'assemblage (112) correspondant aux premiers corps partiels (166) étant agencés et la deuxième couche de recouvrement (106) étant reliée mécaniquement aux éléments d'assemblage (112) et/ou aux deuxièmes corps partiels (168) des éléments d'assemblage (112) et/ou au matériau de noyau solide (110).

14. Dispositif de fabrication (200) pour fabriquer un composant en sandwich (102) selon l'une quelconque des revendications 1 à 6, comprenant
un premier appareil de fourniture (202) pour la fourniture et/ou le transport d'une première couche de recouvrement (104),
un appareil d'agencement d'éléments d'assemblage (208), l'appareil d'agencement d'éléments d'assemblage (208) permettant d'agencer et/ou de réaliser des éléments d'assemblage (112) sur la première couche de recouvrement (104) et/ou de les relier mécaniquement à la première couche de recouvrement (104),
un deuxième appareil de fourniture (204) pour la fourniture et/ou le transport d'une deuxième couche de recouvrement (106),
a) la deuxième couche de recouvrement (106) pouvant être reliée mécaniquement à des éléments d'assemblage (112) agencés sur la première couche de recouvrement (104) au moyen du deuxième appareil de fourniture (204) ; et/ou
b) la deuxième couche de recouvrement (106) pouvant être reliée mécaniquement à un matériau de noyau (110) agencé sur la première couche de recouvrement (104) au moyen du deuxième appareil de fourniture (204) ;
et un appareil d'outil (210), notamment un appareil de perçage et/ou un appareil de poinçonnage, pour réaliser des premières ouvertures (154) sur la première couche de recouvrement (104) et/ou des deuxièmes ouvertures (156) sur la deuxième couche de recouvrement (106) et/ou pour réaliser un élément de fixation (150) sur au moins un élément d'assemblage (112).

15. Dispositif de fabrication (200) selon la revendication 14, **caractérisé par** au moins l'un des points suivants :
a) un appareil capteur (214) pour détecter une position d'éléments d'assemblage (112) agencés sur la première couche de recouvrement (104) et/ou de premiers corps partiels (166) d'éléments d'assemblage (112) agencés sur la première couche de recouvrement (104) et/ou de deuxièmes corps partiels (168) d'éléments d'assemblage (112) agencés sur la première couche de recouvrement (104) et/ou d'éléments de fixation d'éléments d'assemblage (112) agencés sur la première couche de recouvrement (104) ; et/ou
b) un appareil de fourniture de matière d'assemblage (216) pour agencer une matière d'assemblage, notamment un adhésif, sur la première couche de recouvrement (104) et/ou sur la deuxième couche de recouvrement (106) et/ou sur les éléments d'assemblage (112) et/ou sur un matériau de noyau solide (110) ; et/ou
c) un appareil de formage (220) pour réaliser au moins un élément frontal (224) sur le composant en sandwich (102) au moyen du formage et/ou du pliage de la première couche de recouvrement (104) et/ou de la deuxième couche de recouvrement (106) ; et/ou
d) un appareil d'agencement de matériau de noyau (218) pour agencer et/ou réaliser un matériau de noyau solide et/ou liquide (110) sur la première couche de recouvrement (104) ; et/ou
e) un appareil de commande (226) qui est en liaison de signalisation avec un appareil capteur (214) du dispositif de fabrication (200) et/ou avec le premier appareil de fourniture (202) et/ou avec le deuxième appareil de fourniture (204) et/ou avec l'appareil d'agencement d'éléments d'assemblage (208) et/ou avec l'appareil d'outil (210) et/ou avec un appareil d'agencement de matériau de noyau (218) du dispositif de fabrication (200) et/ou avec un appareil de fourniture de matière d'assemblage (216) du dispositif de fabrication (200) et/ou avec un appareil de formage (220) du dispositif de fabrication (200).
